(19) Europäisches Patentamt
European Patent Office
Office européen des brevets

(11) **EP 4 572 441 A1**

(12) **EUROPEAN PATENT APPLICATION**
published in accordance with Art. 153(4) EPC

(43) Date of publication:
**18.06.2025 Bulletin 2025/25**

(21) Application number: **23851937.5**

(22) Date of filing: **10.08.2023**

(51) International Patent Classification (IPC):
*H04W 64/00* (2009.01)     *H04L 5/00* (2006.01)

(52) Cooperative Patent Classification (CPC):
**H04L 5/00; H04W 64/00**

(86) International application number:
**PCT/CN2023/112219**

(87) International publication number:
**WO 2024/032716 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022  CN 202210964767**

(71) Applicant: **Sharp Kabushiki Kaisha
Sakai City, Osaka 590-8522 (JP)**

(72) Inventors:
• **LUO, Chao
  Pudong, Shanghai 201206 (CN)**
• **ZHAO, Yinan
  Pudong, Shanghai 201206 (CN)**
• **LIU, Renmao
  Pudong, Shanghai 201206 (CN)**

(74) Representative: **Müller Hoffmann & Partner
Patentanwälte mbB
St.-Martin-Straße 58
81541 München (DE)**

(54) **METHOD EXECUTED BY USER EQUIPMENT AND USER EQUIPMENT**

(57)     Provided in the present invention are a method performed by a user equipment, and a user equipment. The method performed by a user equipment includes: reporting a sidelink identity to a positioning server; and receiving, from the positioning server, a sidelink identity and location information of one or more anchor UEs and a sidelink identity of a corresponding positioning UE group; and transmitting a sidelink positioning reference signal on a sidelink by using the sidelink identity of the positioning UE group as a destination identity; and receiving a measurement result transmitted by the one or more anchor UEs for the sidelink positioning reference signal; and determining location information of the UE according to the measurement result and the location information of the one or more anchor UEs.

EP 4 572 441 A1

```
┌──────────────────────────────────────┐
│   Determine a candidate anchor UE set  │──⌐ S401
└──────────────────────────────────────┘
                    │
                    ▼
┌──────────────────────────────────────┐
│ Determine a subset of the candidate    │──⌐ S403
│ anchor UE set as an anchor UE set of    │
│ a target UE                             │
└──────────────────────────────────────┘
                    │
                    ▼
┌ ─ ─ ─ ─ ─ ─ ─ ─ ─ ─ ─ ─ ─ ─ ─ ─ ─ ─ ┐
  Transmit one or more instances of     │──⌐ S405
│ information of the anchor UE set to
  the target UE                         │
└ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ┐
  Provide one or more instances of       │──⌐ S407
│ information of the target UE to one or
  more UEs in the anchor UE set,         │
│ respectively
└ ─ ─ ─ ─ ─ ─ ─ ─ ─ ─ ─ ─ ─ ─ ─ ─ ─ ─ ┘
```

FIG. 4

# EP 4 572 441 A1

## Description

### TECHNICAL FIELD

The present invention relates to a method performed by a user equipment, and a user equipment.

### BACKGROUND ART

In a wireless communication system, information may be exchanged between different communication nodes. Wireless communication may be performed on a licensed spectrum and/or on an unlicensed spectrum. An example of the wireless communication system is a system standardized by the 3rd Generation Partnership Project (3GPP), for example, a system based on Long-Term Evolution (LTE) radio access technology, or a system based on New Radio (NR) radio access technology. In a communication system based on 3GPP specifications, examples of the communication nodes may include a user equipment (UE) and a base station (e.g., an eNB or a gNB). A radio link from a base station to a UE may be referred to as a downlink (DL). A radio link from a UE to a base station may be referred to as an uplink (UL). A radio link between UEs may be referred to as a sidelink (SL). An interface for wireless transmission and/or reception between a base station and a UE may be referred to as a Uu interface (e.g., an NR-Uu interface based on NR, or an LTE-Uu interface based on LTE). An interface for wireless transmission and/or reception between UEs may be referred to as a PC5 interface.

One or more positioning techniques may be supported in a wireless communication system. When positioning a UE, location information of the UE may be calculated or estimated according to measurement of a downlink signal, and/or measurement of an uplink signal, and/or measurement of a sidelink signal. In order to support communication on a licensed spectrum and/or an unlicensed spectrum, and/or UE positioning on a licensed spectrum and/or an unlicensed spectrum, a series of problems need to be solved, e.g., channel access mechanisms, physical layer channel and/or signal structures, physical layer procedures (e.g., a synchronization procedure and a feedback and/or determination mechanism), a signaling procedure of a higher layer, resource allocation and/or management, and coexistence among different systems.

Prior Art Documents

Non-Patent Documents

Non-Patent Document 1: RP-152293, New WI proposal: Support for V2V services based on LTE sidelink, 3GPP TSG RAN Meeting#70
Non-Patent Document 2: RP-170798, New WID on 3GPP V2X Phase 2, 3GPP TSG RAN Meeting#75
Non-Patent Document 3: RP-170855, New WID on New Radio Access Technology, 3GPP TSG RAN Meeting#75
Non-Patent Document 4: RP-190766, New WID on 5G V2X with NR sidelink, 3GPP TSG RAN Meeting#83
Non-Patent Document 5: RP-201385, WID revision: NR sidelink enhancement, 3GPP TSG RAN Meeting#88e
Non-Patent Document 6: RP-213678, New WID on NR sidelink evolution, 3GPP TSG RAN Meeting#94e
Non-Patent Document 7: RP-210903, Revised WID on NR Positioning Enhancements, 3GPP TSG RAN Meeting#91e
Non-Patent Document 8: RP-213588, Revised SID on Study on expanded and improved NR positioning, 3GPP TSG RAN Meeting#94e

### SUMMARY OF THE INVENTION

In order to address at least part of the aforementioned issues, provided in the present invention are a method performed by a user equipment and a user equipment. By having a central node (e.g., a positioning server) determine, for a target UE, one or more suitable anchor UEs from a plurality of potential anchor UEs and respectively transmit related information to all related UEs, a positioning delay caused by the target UE independently determining an anchor UE set is reduced, and positioning efficiency is improved.

According to the present invention, a method performed by a user equipment is provided. The method is characterized by comprising: reporting a sidelink identity to a positioning server; and receiving, from the positioning server, a sidelink identity and location information of one or more anchor UEs and a sidelink identity of a corresponding positioning UE group; and transmitting a sidelink positioning reference signal on a sidelink by using the sidelink identity of the positioning UE group as a destination identity; and receiving a measurement result transmitted by the one or more anchor UEs for the sidelink positioning reference signal; and determining location information of the UE according to the measurement result and the location information of the one or more anchor UEs.

Furthermore, according to the present invention, provided is a user equipment, comprising: a processor; and a memory storing instructions, wherein the instructions, when run by the processor, perform the above method.

Therefore, provided in the present invention is a method, wherein a central node (e.g., a positioning server) determines, for a target UE, one or more suitable anchor UEs from a plurality of potential anchor UEs and respectively transmits related information to all related UEs, thereby reducing a positioning delay caused by the target UE independently determining an anchor UE set and improving positioning efficiency.

## BRIEF DESCRIPTION OF THE DRAWINGS

The above and other features of the present invention will be more apparent from the following detailed description in combination with the accompanying drawings, in which:

FIG. 1 shows a flowchart corresponding to a method performed by a user equipment according to Embodiment 1 of the present invention.
FIG. 2 shows a flowchart corresponding to a method performed by a user equipment according to Embodiment 2 of the present invention.
FIG. 3 shows a flowchart corresponding to a method performed by a user equipment according to Embodiment 3 of the present invention.
FIG. 4 shows a flowchart corresponding to a method performed by a user equipment according to Embodiment 4 of the present invention.
FIG. 5 shows a flowchart corresponding to a method performed by a user equipment according to Embodiment 5 of the present invention.
FIG. 6 shows a flowchart corresponding to a method performed by a user equipment according to Embodiment 6 of the present invention.
FIG. 7 shows a block diagram of a communication node to which the present invention relates.

## DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

A plurality of embodiments according to the present invention are specifically described below by using NR (or referred to as 5G or 5G NR) wireless communication system specifications formulated by the 3GPP and subsequent evolved versions thereof (e.g., 5G Advanced) as an exemplary application environment. However, it is to be noted that the present invention is not limited to the following embodiments, but is applicable to many other wireless communication systems, such as wireless communication systems later than 5G, or 4G mobile communication systems earlier than 5G, e.g., Long Term Evolution (LTE), LTE-Advanced, LTE-Advanced Pro, etc.

The terms given in the present invention may be named differently in different wireless communication systems, but unified terms are used in the present invention. When applied to a specific system, the terms may be replaced with terms used in the corresponding system.

Unless otherwise specified, in all embodiments and implementations of the present invention:

- A "node" (or "communication node") may be a UE or a network node (e.g., a base station or a positioning server).
- A "base station" may be an E-UTRAN NodeB (eNB, wherein E-UTRAN represents Evolved Universal Terrestrial Radio Access Network), or a gNB (a node which provides to a UE an NR user plane and a control plane protocol termination and which is connected to a 5G core network via an NG interface), or an ng-eNB (a node which provides to a UE an E-UTRA user plane and a control plane protocol termination and which is connected to a 5G core network via an NG interface, wherein E-UTRA represents Evolved Universal Terrestrial Radio Access).
- A "positioning server" may refer to an Enhanced Serving Mobile Location Center (E-SMLC), or an SUPL Location Platform (SLP, wherein SUPL refers to Secure User Plane Location), or a Location Management Function (LMF), or another node which implements similar functions.
- "Higher layer(s)" or "upper layer(s)" may refer to, in a specific protocol stack, one or more protocol layers or protocol sub-layers above a reference protocol layer or a reference protocol sub-layer. For example, if the reference protocol layer or the reference protocol sub-layer is a physical layer, the "higher layer" may refer to a Medium Access Control (MAC) layer, and/or a Radio Link Control (RLC) layer, and/or a Packet Data Convergence Protocol (PDCP) layer, and/or a PC5 Radio Resource Control (RRC) layer, and/or a PC5-S layer, and/or an RRC layer, and/or another protocol layer or protocol sub-layer. Unless otherwise specified, the reference protocol layer or the reference protocol sub-layer is a physical layer.

- "Configure" may mean that in a communication node (e.g., a UE), a protocol layer (e.g., RRC layer) entity provides configuration information to another protocol layer (e.g., physical layer) entity.
- "Configuration" may mean that a protocol layer (e.g., RRC layer) entity of a communication node (e.g., a base station) provides configuration information to a peer protocol layer entity of another communication node (e.g., a UE) (for example, the base station transmits RRC signaling to the UE, wherein the signaling includes the configuration information, and as another example, PC5-RRC signaling is transmitted from UE-A to UE-B, wherein the signaling includes the configuration information).
- "Pre-configure" may mean that corresponding configuration information is preset in a specific storage location in a communication node (e.g., a UE), or corresponding configuration information is preset in a specific storage location accessible by the UE.
- "Configure" may include "pre-configure".
- The constant $T_c$ may be defined as: $T_c = 1/(\Delta f_{max} \cdot N_f)$, where $\Delta f_{max} = 480 \cdot 10^3$ Hz, and $N_f = 4096$.
- The constant $\kappa$ may be defined as: $\kappa = T_s/T_c = 64$, where $T_s = 1/(\Delta f_{ref} \cdot N_{f,ref})$, $\Delta f_{ref} = 15 \cdot 10^3$ Hz, and $N_{f,ref} = 2048$.
- $\mu$ may represent a subcarrier spacing configuration, such as $\mu = 0$. $\Delta f$ may represent a corresponding subcarrier spacing (SCS), and for example, $\mu = 0$ corresponds to $\Delta f = 15$ kHz.
- "Symbol" may refer to an orthogonal frequency division multiplexing (OFDM) symbol.
- $N_{slot}^{subframe,\mu}$ may represent the number of slots in each subframe.
- $N_{symb}^{slot}$ may represent the number of symbols in each slot.
- One resource may correspond to one or more of the following:

  - One or more parameters in the time-domain. For example, a starting symbol of the resource, a starting slot of the resource, the number of symbols occupied by the resource, or the number of slots occupied by the resource.
  - One or more parameters in the frequency-domain. For example, a starting subchannel of the resource, a starting resource block (RB) of the resource, a starting subcarrier of the resource, the number of sub-channels occupied by the resource, the number of RBs occupied by the resource, or the number of subcarriers occupied by the resource.
  - One or more parameters in the code-domain. For example, a cyclic shift value corresponding to the resource or a corresponding cyclic shift index. As another example, a cyclic shift pair value corresponding to the resource or a corresponding cyclic shift pair index.
  - One or more parameters in the spatial-domain. For example, a layer corresponding to the resource, where a "layer" may refer to a multiple input multiple output (MIMO) layer.

- An "RB" may refer to a virtual resource block (VRB), a physical resource block (PRB), a common resource block (CRB), or an interlaced resource block (IRB).
- "Number" and "index" are interchangeable. For example, the number of an RB may also be referred to as the index of the RB. As another example, "numbering an RB as 0" may also be expressed as "indexing an RB as 0".
- An RB represented by a CRB number may also be represented by a corresponding PRB number, and vice versa.
- The numbering of elements in a sequence (or an array, or a list, or an ordered set, or the like) may start from 0. For example, the first RB of an RB set may be referred to as RB 0 of the RB set.
- An object (e.g., a subcarrier, a slot, a cyclic shift, etc.) may be represented by the index thereof. For example, a CRB numbered as 0 may be referred to as CRB 0.
- If a corresponding number is not specified when an object is mentioned, the number of the object may be one or multiple. For example, in the expression "performing transmission on a channel", the "transmission(s)" may correspond to one transmission, or a plurality of transmissions.
- $\Delta(x_1, x_2)$ may represent an offset between $x_1$ and $x_2$, where $x_1$ and $x_2$ may be two parameters (or variables) that can be compared, or two possible values of one parameter (or variable) (e.g., $x_1$ and $x_2$ may be two slots, or two sub-frames, or two frames, or two subcarriers, or two RBs, or two sub-channels, etc.).

- $\Delta(x_1, x_2)$ may be equal to $x_2 - x_1$. For example, a CRB set is denoted as $A_{CRB}^{ref} = \{a_0^{ref}, a_1^{ref}, a_2^{ref}, a_3^{ref}, a_4^{ref}\}$, where $a_0^{ref} = 5$, $a_1^{ref} = 15$, $a_2^{ref} = 25$, $a_3^{ref} = 35$, and $a_4^{ref} = 45$. $x_1 = a_0^{ref}$ and $x_2 = a_3^{ref}$, so that $\Delta(x_1, x_2)$ may be equal to

$$a_3^{ref} - a_0^{ref} = 35 - 5 = 30$$.

- $\Delta(x_1, x_2)$ may be equal to $\text{idx}(x_2)$ - $\text{idx}(x_1)$, where $\text{idx}(x_1)$ and $\text{idx}(x_2)$ are indexes of elements corresponding to $x_1$ and $x_2$ in the same set, respectively. For example, the CRB set is denoted as $A_{CRB}^{ref} = \{a_0^{ref}, a_1^{ref}, a_2^{ref}, a_3^{ref}, a_4^{ref}\}$, where $a_0^{ref} = 5$, $a_1^{ref} = 15$, $a_2^{ref} = 25$, $a_3^{ref} = 35$, and $a_4^{ref} = 45$. $x_1 = a_0^{ref}$ and $x_2 = a_3^{ref}$, so that $\Delta(x_1, x_2)$ may be equal to 3 - 0 = 3.

- An "offset between $x_1$ and $x_2$" may also be referred to as an offset of $x_2$ with respect to $x_1$ or an offset of $x_2$ relative to $x_1$.
- An "offset between $x_1$ and $x_2$" may also be referred to as an offset from $x_1$ to $x_2$.
- Where applicable, if $\Delta(x_1, x_2) = D$, $x_2$ may be denoted as $x_2 = \text{ADD}(x_1, D)$.
- Where applicable, if $\Delta(x_1, x_2) = D$, $x_1$ may be denoted as $x_1 = \text{SUBTRACT}(x_2, D)$.
- An offset between two subcarriers may refer to an offset between center frequencies of the two subcarriers.
- A modulo operation may be defined as $r = a \bmod N$, where

  - $r$ is a remainder.

  - 

$$a = N \times q + r,$$

  where $q = \lfloor a/N \rfloor$. $q$ may be referred to as an integer quotient of $a$ and $N$.

  - 

$$0 \leq r < |N|.$$

- An "SL slot" may refer to a slot in which an SL resource is configured or pre-configured. The "SL resource" may or may not include a resource for a specific purpose. The "resource for a specific purpose" may be a resource for a synchronization procedure (for example, a resource for transmitting an S-SS/Physical Sidelink Broadcast CHannel or Sidelink-Synchronization Signal/Physical Sidelink Broadcast CHannel (S-SS/PSBCH) block).
- An "SL slot" may refer to a slot that belongs to a certain SL resource pool.
- A "physical slot" may refer to a slot in a physical slot set, where the physical slot set may be all slots in a continuous period of time (e.g., a frame period having a duration of 1024 frames). Physical slots in the physical slot set may be sequentially numbered as 0, 1, ... in chronological order.
- A "logical slot" may be a slot in a slot set of an SL resource pool, where the slot set may be all slots belonging to the SL resource pool in a continuous period of time (e.g., a frame period having a duration of 1024 frames). Logical slots in the slot set may be sequentially numbered as 0, 1, ... in chronological order.

- An SL symbol set in an SL slot may be denoted as $L_{SL} = \{l_0^{SL}, l_1^{SL}, ..., l_{N_{length}^{SL}-1}^{SL}\}$, where $l_0^{SL}$, $l_1^{SL}$, ..., $l_{N_{length}^{SL}-1}^{SL}$ respectively represent indexes of corresponding symbols in the slot, where $l_0^{SL} = l_{start}^{SL}$, $l_1^{SL} = l_{start}^{SL} + 1$, ..., $l_{N_{length}^{SL}-1}^{SL} = l_{start}^{SL} + N_{length}^{SL} - 1$, where $l_{start}^{SL}$ is the index of the first SL symbol in the slot (for example, configured via the parameter *sl-StartSymbol*), and $N_{length}^{SL}$ is the number of SL symbols in the slot (for example, configured via the parameter *sl-LengthSymbols*).

- An SL transmission which multiplexes a Physical Sidelink Shared Channel (PSSCH) and a Physical Sidelink Control Channel (PSCCH) associated therewith in the same resource (e.g., several sub-channels in an SL slot) may be referred to as a "PSCCH/PSSCH transmission".
- In the time-domain, a "frame" (or referred to as a "radio frame") may be a system frame or a direct frame. A frame number period (e.g., denoted as $T_{FNP}$) may be a predefined or configured or pre-configured value, e.g., $T_{FNP}$ = 1024 frames. The duration of each frame may be $T_f$ = 10 milliseconds, which may include 10 subframes, where the duration of each subframe is $T_{sf} = 1$ millisecond. Each sub-frame may include $N_{slot}^{subframe,\mu}$ slots, e.g., $N_{slot}^{subframe,\mu} = 2^\mu$.

The index of a slot in a sub-frame may be denoted as $n_s^\mu$ ($n_s^\mu \in \{0, 1, \ldots, N_{slot}^{subframe,\mu} - 1\}$). The index of a slot in a frame may be denoted as $n_{s,f}^\mu$ ($n_{s,f}^\mu \in \{0, 1, \ldots, N_{slot}^{frame,\mu} - 1\}$), where $N_{slot}^{frame,\mu}$ may be equal to

$10 \cdot 2^\mu$. A slot index in a frame number period may be denoted as $n_{s,f,p}^\mu$ ($n_{s,f,p}^\mu \in \{0, 1, \ldots, N_{slot}^{FNP,\mu} - 1\}$),

where $N_{slot}^{FNP,\mu}$ may be equal to $T_{FNP} \cdot N_{slot}^{frame,\mu}$ (e.g., $1024 \cdot (10 \cdot 2^\mu)$).

- "Target UE" may refer to a UE which is being positioned (or referred to as a "device which is being positioned").
- "Anchor UE" may refer to a UE which provides support for positioning of a target UE (or referred to as a "device which provides support for positioning of a target UE").
- A sidelink identity (sidelink ID, SL ID) may be a layer 1 SL ID or a layer 2 SL ID.
- "SCI" (sidelink control information) may refer to 1st-stage SCI and/or 2nd-stage SCI.

An SL transmission (e.g., a PSCCH/PSSCH transmission) may be associated with a pair of SL IDs: a "source ID" and a "destination ID". The "source ID" may be used to identify a UE which performs the SL transmission (e.g., the UE may be referred to as a TX UE of the SL transmission), and accordingly, the "source ID" may be referred to as an SL ID of the TX UE. The "destination ID" (or the pair of SL IDs) may correspond to one or more UEs which receive the SL transmission (e.g., each such UE may be referred to as an RX UE of the SL transmission). The "source ID" and/or the "destination ID" may be indicated in control information associated with the SL transmission (e.g., control information in SCI and/or a MAC header). The pair of SL IDs may be associated with a cast type. For example, when the cast type is broadcast or groupcast, the "destination ID" (or the pair of SL IDs) corresponds to one or more RX UEs. As another example, when the cast type is unicast, the "destination ID" (or the pair of SL IDs) corresponds to one RX UE, and the "destination ID" is an SL ID of the RX UE.

A UE may have one or more SL IDs. For example, the "source IDs" associated with SL transmissions performed by a UE at different times (or when communicating with another different UE, or when used for SL communication for a different purpose) may be different. Specifically, for example, a UE may have a dedicated SL ID for identifying the UE in SL transmission and/or reception related to positioning.

A certain SL ID of a UE may be autonomously generated by the UE, or may be allocated by another communication node (e.g., a base station or a positioning server).

A "destination ID" associated with a groupcast transmission or a broadcast transmission may be determined in a predefined or configured or pre-configured manner, or may be generated by a TX UE of the groupcast transmission or the broadcast transmission, or may be allocated by a network node (e.g., a base station or a positioning server). All RX UEs of a groupcast transmission and, optionally, a TX UE of the groupcast transmission belong to the same "group" (or referred to as a "groupcast group"), and accordingly, the "destination ID" of the groupcast transmission may be referred to as the SL ID of the "group".

Transmission of a reference signal that is related to positioning and is based on a Uu interface (or referred to as "based on a DL and/or a UL") and/or based on a PC5 interface (or referred to as "based on an SL") and/or measurement of the reference signal and/or transmission and/or reception of a related measurement report may be supported in 5G. In a positioning operation which is related to an SL, some or all anchor UEs that provide support for positioning of a target UE and, optionally, the target UE may form a "positioning UE group". The "positioning UE group" may be associated with an SL ID (e.g., referred to as the SL ID of the "positioning UE group"). For example, to transmit information to all anchor UEs in the "positioning UE group", the target UE may perform a groupcast SL transmission, wherein the "destination ID" associated therewith is the SL ID of the "positioning UE group". In a "positioning UE group" including N anchor UEs, each anchor UE may correspond to a group member ID. For example, values of the group member IDs may be sequentially set to 1, 2, ..., N according to a certain rule (e.g., in ascending order of the SL IDs of the UEs in the group). Optionally, a target UE in a "positioning UE group" may correspond to a group member ID having the value of 0.

A reference signal related to positioning on an SL may be referred to as a sidelink positioning reference signal (SL-PRS). A frequency resource for the SL-PRS may be configured to be in a positioning frequency layer, in an SL carrier, in a sidelink bandwidth part (SL BWP), or in an SL resource pool.

An "SL-PRS resource" may be defined as time-domain resources and/or frequency-domain resources and/or code-domain resources and/or spatial-domain resources corresponding to (or occupied by) an SL-PRS transmission. Optionally, in some cases, a plurality of SL-PRS resources which occur periodically and are defined in the above manner may be collectively referred to as "an SL-PRS resource" (or referred to as a multi-instance SL-PRS resource).

$K_{comb}^{SLPRS}$ $(K_{comb}^{SLPRS} \geq 1)$ SL-PRS resources may be multiplexed in an "SL-PRS resource grid". The "SL-PRS resource grid" may correspond to $L_{sym}^{SLPRS} (L_{sym}^{SLPRS} \geq 1)$ symbols (e.g., $L_{sym}^{SLPRS}$ consecutive symbols) in the time-domain and $N_{RB}^{SLPRS}$ $(N_{RB}^{SLPRS} \geq 1)$ RBs (e.g., $N_{RB}^{SLPRS}$ consecutive RBs) in the frequency-domain. The $L_{sym}^{SLPRS}$ symbols may be in the same slot, and numbers thereof in the slot may be respectively denoted as $l_{start}^{SLPRS}$, $l_{start}^{SLPRS} + 1$, ..., $l_{start}^{SLPRS} + L_{sym}^{SLPRS} - 1$. CRB numbers of the $N_{RB}^{SLPRS}$ RBs may be respectively denoted as $crb_{start}^{SLPRS}$, $crb_{start}^{SLPRS} + 1$, ..., $crb_{start}^{SLPRS} + N_{RB}^{SLPRS} - 1$ (corresponding PRB numbers may be denoted as $prb_{start}^{SLPRS}$, $prb_{start}^{SLPRS} + 1$, ..., $prb_{start}^{SLPRS} + N_{RB}^{SLPRS} - 1$, respectively). A bandwidth corresponding to the $N_{RB}^{SLPRS}$ RBs may be referred to as a bandwidth of an SL-PRS resource, or a bandwidth of an SL-PRS transmission, or an "SL-PRS bandwidth". Any one of $K_{comb}^{SLPRS}$, $L_{sym}^{SLPRS}$, $N_{RB}^{SLPRS}$, $l_{start}^{SLPRS}$, and $crb_{start}^{SLPRS}$ (or $prb_{start}^{SLPRS}$) may be a predefined or configured or pre-configured value, or may be determined according to one or more predefined or configured or pre-configured values. The $L_{sym}^{SLPRS}$ symbols may correspond to an "SL-PRS occasion" (or referred to as an SL-PRS transmission occasion) in the time-domain. Optionally, in addition to the $L_{sym}^{SLPRS}$ symbols, an SL-PRS occasion may additionally include a symbol (e.g., a symbol $l_{start}^{SLPRS} - 1$) for automatic gain control (AGC), and/or a gap symbol (e.g., a symbol $l_{start}^{SLPRS} + L_{sym}^{SLPRS}$) for switching between transmission and reception.

In the $K_{comb}^{SLPRS}$ SL-PRS resources, a set of resource elements (REs) occupied by each SL-PRS resource may correspond to a unique comb-like pattern having a size of $K_{comb}^{SLPRS}$, referred to as, for example, a pattern Comb-$K_{comb}^{SLPRS}$. Specifically, for example, $K_{comb}^{SLPRS} = 2$ and $L_{sym}^{SLPRS} = 2$. Accordingly,

- In the symbol $l_{start}^{SLPRS}$, the first SL-PRS resource occupies subcarriers 0, 2, 4, 6, 8, and 10 in each RB in the "SL-PRS bandwidth", and the second SL-PRS resource occupies subcarriers 1, 3, 5, 7, 9, and 11 in each RB in the "SL-PRS bandwidth".

- In the symbol $l_{start}^{SLPRS} + 1$, the first SL-PRS resource occupies subcarriers 1, 3, 5, 7, 9, and 11 in each RB in the "SL-PRS bandwidth", and the second SL-PRS resource occupies subcarriers 0, 2, 4, 6, 8, and 10 in each RB in the "SL-PRS bandwidth".

In the $K_{comb}^{SLPRS}$ SL-PRS resources, a subcarrier number of a lowest numbered subcarrier of each SL-PRS resource in the symbol $l_{start}^{SLPRS}$ in a corresponding RB may be referred to as an "RE offset" of the SL-PRS resource. For example, in the above example, the "RE offset" of the first SL-PRS resource is 0, and the "RE offset" of the second SL-PRS resource is 1. The $K_{comb}^{SLPRS}$ SL-PRS resources may be indexed in ascending order of "RE offsets". For example, the "RE offset" of the SL-PRS resource $i$ $(i \in \{0, 1, ..., K_{comb}^{SLPRS} - 1\})$ is denoted as $k_{offset,i}^{SLPRS}$, so that $k_{offset,i}^{SLPRS} = i$.

In the $K_{comb}^{SLPRS}$ SL-PRS resources, each RE occupied by the SL-PRS resource $i$ $(i \in \{0, 1, ..., K_{comb}^{SLPRS} - 1\})$ may be expressed as $(k, l)_{p,\mu}$, where $p$ and $\mu$ are an antenna port and a subcarrier spacing configuration corresponding to a corresponding SL-PRS transmission, respectively. $l$ is the number of a symbol corresponding to the RE, and $l \in \{l_{start}^{SLPRS}, \; l_{start}^{SLPRS} + 1, \; ..., \; l_{start}^{SLPRS} + L_{sym}^{SLPRS} - 1\}$ . $k$ is the number of a subcarrier corresponding to the RE. $k$ may be related to $K_{comb}^{SLPRS}$ and/or $k_{offset,i}^{SLPRS}$ . For example, $k$ may be expressed as

$$k = m K_{comb}^{SLPRS} + \left( \left( k_{offset,i}^{SLPRS} + k' \right) \bmod K_{comb}^{SLPRS} \right)$$

A reference point corresponding to $k = 0$ may be a "point A" (e.g., subcarrier 0 of CRB 0) corresponding to a corresponding positioning frequency layer or SL carrier or SL BWP or SL resource pool, or may be subcarrier 0 of a lowest numbered RB of the positioning frequency layer or SL carrier or SL BWP. $m$ may be an index of a point mapped to the RE in a corresponding SL-PRS sequence. $k'$ may be a predefined or configured or pre-configured value related to $K_{comb}^{SLPRS}$ and/or $l$ and/or $l_{start}^{SLPRS}$ and/or $l - l_{start}^{SLPRS}$ .

Optionally, in the $K_{comb}^{SLPRS}$ SL-PRS resources, for $i \in \{0, 1, ..., K_{comb}^{SLPRS} - 1\}$ , an SL-PRS transmission (e.g., denoted as $tr_i^{SLPRS}$ ) on an SL-PRS resource i may be associated with one or more instances of "SL-PRS control information". The "SL-PRS control information" may correspond to information for an SL transmission which is indicated in the physical layer (e.g., information indicated in SCI) and/or information indicated in a higher layer (e.g., information indicated in the PC5-RRC layer, information indicated in a MAC header, or information indicated in a MAC control element (CE)). Part or all of the "SL-PRS control information" may be carried in a physical layer channel transmission (e.g., denoted as $tr_i^{SLPRS,CI}$ ). Accordingly, $tr_i^{SLPRS,CI}$ may be referred to as a physical layer channel transmission associated with $tr_i^{SLPRS}$ (or the SL-PRS resource $i$), wherein

- The SCI may be referred to as SCI associated with the SL-PRS resource $i$ (or $tr_i^{SLPRS}$ or $tr_i^{SLPRS,CI}$ ).
- The physical layer channel transmission may be a PSCCH transmission, or a PSSCH transmission, or a PSCCH/PSSCH transmission, or a PSFCH transmission, or another physical layer channel transmission.
- $tr_i^{SLPRS,CI}$ and $tr_i^{SLPRS}$ may correspond to resources in the same SL resource pool.
- In the time-domain, $tr_i^{SLPRS,CI}$ and $tr_i^{SLPRS}$ may be in the same slot. For example, $tr_i^{SLPRS,CI}$ may correspond to $L_{sym}^{SLPRS,CI}$ consecutive symbols starting from the symbol $l_{start}^{SLPRS,CI}$ . A symbol offset between the symbol $l_{start}^{SLPRS,CI}$ and the symbol $l_{start}^{SLPRS}$ may be denoted as $D_{start}^{SLPRS,CI}$ , i.e., $D_{start}^{SLPRS,CI} = \Delta \left( l_{start}^{SLPRS,CI}, l_{start}^{SLPRS} \right)$ . $l_{start}^{SLPRS,CI}$ or $D_{start}^{SLPRS,CI}$ may be a predefined or configured or pre-configured value, or may be determined according to one or more predefined or configured or pre-configured values. $L_{sym}^{SLPRS,CI}$ may be a predefined or configured or pre-configured value, or may be determined according to one or more predefined or configured or pre-configured values. Specifically, for example, $D_{start}^{SLPRS,CI} = 0$ . As another example, $D_{start}^{SLPRS,CI} = 1$ . As another example, $L_{sym}^{SLPRS,CI} = 1$ . As another example, $L_{sym}^{SLPRS,CI} = 2$ . As another example, $L_{sym}^{SLPRS,CI} = 3$ .
- In the frequency-domain, $tr_i^{SLPRS,CI}$ may correspond to some or all of $N_{RB}^{SLPRS}$ RBs in the "SL-PRS resource grid". For example, $tr_i^{SLPRS,CI}$ may correspond to $N_{RB}^{SLPRS,CI}$ consecutive RBs starting from the RB of which the CRB number is $crb_{start,i}^{\mathrm{SLPRS,CI}}$ (the corresponding PRB number is $prb_{start,i}^{\mathrm{SLPRS,CI}}$). $N_{RB}^{\mathrm{SLPRS,CI}}$ may be a predefined or configured or pre-configured value, or may be determined according to one or more predefined or configured or pre-configured values. $crb_{start,i}^{\mathrm{SLPRS,CI}}$ (or $prb_{start,i}^{\mathrm{SLPRS,CI}}$) may be related to one or more time-domain parameters and/or frequency-domain parameters (e.g., the "RE offset" ($k_{offset,i}^{\mathrm{SLPRS}}$) of the SL-PRS resource $i$, or the lowest numbered RB (represented by $crb_{start}^{\mathrm{SLPRS}}$ or $prb_{start}^{\mathrm{SLPRS}}$) of the "SL-PRS resource grid") of the SL-PRS resource i. Specifically, for example, $crb_{start,i}^{\mathrm{SLPRS,CI}} = crb_{start}^{\mathrm{SLPRS}} + k_{offset,i}^{\mathrm{SLPRS}} \cdot N_{RB}^{\mathrm{SLPRS,CI}}$. As another example, $crb_{start,i}^{\mathrm{SLPRS,CI}} = crb_{start}^{\mathrm{SLPRS}} + i \cdot N_{RB}^{\mathrm{SLPRS,CI}}$. As another example, $prb_{start,i}^{\mathrm{SLPRS,CI}} = prb_{start}^{\mathrm{SLPRS}} + k_{offset,i}^{\mathrm{SLPRS}} \cdot N_{RB}^{\mathrm{SLPRS,CI}}$. As another example, $prb_{start,i}^{\mathrm{SLPRS,CI}} = prb_{start}^{\mathrm{SLPRS}} + i \cdot N_{RB}^{\mathrm{SLPRS,CI}}$. By associating the position of the frequency-domain resource of $tr_i^{\mathrm{SLPRS,CI}}$ with one or more time-domain and/or frequency-domain parameters of the SL-PRS resource $i$, blind detection of the position of the frequency-domain resource of $tr_i^{\mathrm{SLPRS,CI}}$ may be avoided, thereby reducing the complexity of receiving $tr_i^{\mathrm{SLPRS,CI}}$.

In the frequency-domain, a positioning frequency layer or SL carrier or SL BWP or SL resource pool may include $N_{BW}^{\mathrm{SLPRS}}$ SL-PRS bandwidths, and the $N_{BW}^{\mathrm{SLPRS}}$ SL-PRS bandwidths may be sequentially indexed in ascending order of frequencies as 0, 1, ..., $N_{BW}^{\mathrm{SLPRS}} - 1$. Accordingly, each SL-PRS occasion in the time-domain may correspond to $N_{BW}^{\mathrm{SLPRS}}$ "SL-PRS resource grids" in the positioning frequency layer or SL carrier or SL BWP or SL resource pool. $N_{BW}^{\mathrm{SLPRS}}$ may be a predefined or configured or pre-configured value, or may be determined according to one or more predefined or configured or pre-configured values. For example, $N_{BW}^{\mathrm{SLPRS}} = 1$.

In the time-domain, resources for the SL-PRS may occur periodically. For example, in an "SL-PRS resource period" having a duration of $T_{period}^{\mathrm{SLPRS}}$ slots (e.g., $T_{period}^{\mathrm{SLPRS}}$ physical slots or $T_{period}^{\mathrm{SLPRS}}$ logical slots), there may be $N_{slots}^{\mathrm{SLPRS}}$ SL-PRS slots (for example, accordingly, slot numbers in the SL-PRS resource period are sequentially denoted in chronological order as $t_0^{\mathrm{SLPRS}}$, $t_1^{\mathrm{SLPRS}}$, ..., $t_{N_{slots}^{\mathrm{SLPRS}}-1}^{\mathrm{SLPRS}}$). The $N_{slots}^{\mathrm{SLPRS}}$ SL-PRS slots may be $N_{slots}^{\mathrm{SLPRS}}$ physical slots or $N_{slots}^{\mathrm{SLPRS}}$ logical slots. For $i \in \{0, 1, ..., N_{slots}^{\mathrm{SLPRS}} - 1\}$, there may be $N_{occasions}^{\mathrm{SLPRS}}$ SL-PRS occasions in the SL-PRS slot $t_i^{\mathrm{SLPRS}}$, which are sequentially indexed in chronological order as $0, 1, ..., N_{occasions}^{\mathrm{SLPRS}} - 1$. Any one of $T_{period}^{\mathrm{SLPRS}}$, $N_{slots}^{\mathrm{SLPRS}}$, and $N_{occasions}^{\mathrm{SLPRS}}$ may be a predefined or configured or pre-configured value, or may be determined according to one or more predefined or configured or pre-configured values. For example, $N_{occasions}^{\mathrm{SLPRS}} = 1$. As another example, $T_{period}^{\mathrm{SLPRS}} = 1$ logical slot (e.g., this may correspond to a case where each slot in an SL resource pool is configured with an SL-PRS resource). For $i \in \{0, 1, ..., N_{slots}^{\mathrm{SLPRS}} - 1\}$, $t_i^{\mathrm{SLPRS}}$ may be equal to $N_{offset}^{\mathrm{SLPRS}} + \left(N_{interval}^{\mathrm{SLPRS}} + 1\right) \cdot i$, or be equal to $N_{offset}^{\mathrm{SLPRS}} + N_{interval}^{\mathrm{SLPRS}} \cdot i$, where either $N_{offset}^{\mathrm{SLPRS}}$ or $N_{interval}^{\mathrm{SLPRS}}$ may be a predefined or configured or pre-configured value, or may be determined according to one or more predefined or configured or pre-configured values.

SL-PRS resource periods may be sequentially numbered in chronological order as 0, 1, ... within a frame period having a duration of 1024 frames. As a special case, when $T_{\text{period}}^{\text{SLPRS}} = 1$ physical slot (or logical slot), SL-PRS resource period numbers 0, 1, ... may correspond to physical slot (or logical slot) numbers 0, 1, ..., respectively.

In a positioning frequency layer or SL carrier or SL BWP or SL resource pool, all SL-PRS resources within a period of time (e.g., several physical slots, several logical slots, or an SL-PRS resource period) may be indexed according to one of the following:

- First, incrementally increasing the "RE offset", then incrementally increasing the SL-PRS bandwidth index, then incrementally increasing the SL-PRS occasion within the slot, and then incrementally increasing the SL-PRS slot.
- First, incrementally increasing the "RE offset", then incrementally increasing the SL-PRS occasion within the slot, then incrementally increasing the SL-PRS bandwidth index, and then incrementally increasing the SL-PRS slot.
- First, incrementally increasing the "RE offset", then incrementally increasing the SL-PRS occasion within the slot, then incrementally increasing the SL-PRS slot, and then incrementally increasing the SL-PRS bandwidth index.
- First, incrementally increasing the SL-PRS occasion within the slot, then incrementally increasing the SL-PRS slot, then incrementally increasing the "RE offset", and then incrementally increasing the SL-PRS bandwidth index.
- First, incrementally increasing the SL-PRS occasion within the slot, then incrementally increasing the "RE offset", then incrementally increasing the SL-PRS slot, and then incrementally increasing the SL-PRS bandwidth index.
- First, incrementally increasing the SL-PRS occasion within the slot, then incrementally increasing the "RE offset", then incrementally increasing the SL-PRS bandwidth index, and then incrementally increasing the SL-PRS slot.

In a positioning frequency layer or SL carrier or SL BWP or SL resource pool, all "SL-PRS resource grids" within a period of time (e.g., several physical slots, several logical slots, or an SL-PRS resource period) may be indexed according to one of the following:

- First, incrementally increasing the SL-PRS bandwidth index, then incrementally increasing the SL-PRS occasion within the slot, and then incrementally increasing the SL-PRS slot.
- First, incrementally increasing the SL-PRS bandwidth index, then incrementally increasing the SL-PRS slot, and then incrementally increasing the SL-PRS occasion within the slot.
- First, incrementally increasing the SL-PRS occasion within the slot, then incrementally increasing the SL-PRS slot, and then incrementally increasing the SL-PRS bandwidth index.
- First, incrementally increasing the SL-PRS occasion within the slot, then incrementally increasing the SL-PRS bandwidth index, and then incrementally increasing the SL-PRS slot.
- First, incrementally increasing the SL-PRS slot, then incrementally increasing the SL-PRS occasion within the slot, and then incrementally increasing the SL-PRS bandwidth index.
- First, incrementally increasing the SL-PRS slot, then incrementally increasing the SL-PRS bandwidth index, and then incrementally increasing the SL-PRS occasion within the slot.

In special cases such as $N_{BW}^{\text{SLPRS}} = 1$ and/or $N_{occasions}^{\text{SLPRS}} = 1$ and/or $T_{\text{period}}^{\text{SLPRS}} = 1$, the description of the manner in which the SL-PRS resources or the "SL-PRS resource grids" are indexed may be adjusted accordingly. For example, when $N_{BW}^{\text{SLPRS}} = 1$, there is only one SL-PRS bandwidth index, therefore, it makes no difference whether the step of "incrementally increasing the SL-PRS bandwidth index" is performed. That is, the step of "incrementally increasing the SL-PRS bandwidth index" may be removed. As another example, when $N_{occasions}^{\text{SLPRS}} = 1$, there is only one SL-PRS occasion in each slot, therefore, it makes no difference whether the step of "incrementally increasing the SL-PRS occasion within the slot" is performed. That is, the step of "incrementally increasing the SL-PRS occasion within the slot" may be removed. As another example, when $T_{\text{period}}^{\text{SLPRS}} = 1$, and when "a period of time" is an SL-PRS resource period, there is only one slot in each SL-PRS resource period, therefore, it makes no difference whether the step of "incrementally increasing the SL-PRS slot" is performed. That is, the step of "incrementally increasing the SL-PRS slot" may be removed.

In an SL-PRS resource reservation and/or allocation and/or selection procedure, an SL-PRS resource may be indicated via an index of the SL-PRS resource. For example, one or more indexes (for example, respectively denoted as

$idx_0^{\text{SLPRS}}$ , $idx_1^{\text{SLPRS}}$ , ..., $idx_{N_{IDX}^{SLPRS}-1}^{\text{SLPRS}}$ , where $N_{IDX}^{SLPRS} \geq 1$) may be indicated in SCI transmitted within an SL-PRS resource period $j$ (or a physical slot $j$ or a logical slot $j$), where $idx_g^{\text{SLPRS}}$ ($g \in \{0, 1, ..., N_{IDX}^{SLPRS}-1\}$) may represent an SL-PRS resource index $idx_g^{\text{SLPRS}}$ within an SL-PRS resource period $j + d_{\text{offset}}^{\text{SLPRS}}$ (or a physical slot $j + d_{\text{offset}}^{\text{SLPRS}}$ or a logical slot $j + d_{\text{offset}}^{\text{SLPRS}}$). If $g_1 \in \{0, 1, ..., N_{IDX}^{SLPRS}-1\}$, $g_2 \in \{0, 1, ..., N_{IDX}^{SLPRS}-1\}$, and $g_1 < g_2$, a relationship between $idx_{g_1}^{\text{SLPRS}}$ and $idx_{g_2}^{\text{SLPRS}}$ may be $idx_{g_1}^{\text{SLPRS}} < idx_{g_2}^{\text{SLPRS}}$. $d_{\text{offset}}^{\text{SLPRS}}$ may be indicated in the SCI, may be a predefined or configured or pre-configured value, or may be determined according to one or more predefined or configured or pre-configured values. For example, $d_{\text{offset}}^{\text{SLPRS}} = 0$. As another example, $d_{\text{offset}}^{\text{SLPRS}} = 1$. $idx_0^{\text{SLPRS}}$ may be indicated explicitly (e.g., indicated via a field in the SCI) or implicitly (for example, the SCI is SCI associated with an SL-PRS resource corresponding to $idx_0^{\text{SLPRS}}$, and as another example, a physical layer channel carrying the SCI is a physical layer channel associated with the SL-PRS resource corresponding to $idx_0^{\text{SLPRS}}$).

In an SL-PRS resource reservation and/or allocation and/or selection procedure, an SL-PRS resource may be indicated via an index of an "SL-PRS resource grid" and an "RE offset" within the corresponding "SL-PRS resource grid".

In an SL-PRS resource reservation and/or allocation and/or selection procedure, the TX UE of an SL-PRS resource may be determined in one or more ways. For example, in an "SL-PRS resource grid", if the TX UE of a physical layer channel associated with an SL-PRS resource $i$ ($i \in \{0,1, ..., K_{comb}^{SLPRS}-1\}$) is UE-A, then the TX UE of the SL-PRS resource $i$ is also UE-A. In addition, UE-A may indicate, in control information carried by the physical layer channel, one or more additional SL-PRS resources and/or an action performed by one or more RX UEs of the physical layer channel (for example, if the action is "SL-PRS transmission", a TX UE of the one or more additional SL-PRS resources is the one or more RX UEs of the physical layer channel, and as another example, if the action is "SL-PRS measurement", then a TX UE of the one or more other SL-PRS resources is UE-A).

An SL resource pool configured with an SL-PRS resource may be referred to as an "SL-PRS resource pool".

An SL-PRS resource may be multiplexed in an SL resource pool with a resource occupied by another SL transmission (e.g., a PSCCH transmission and/or a PSSCH transmission carrying application layer data, and/or a corresponding PSFCH transmission). For example, an SL-PRS resource may correspond to one or more symbols in a slot in which a PSCCH/PSSCH transmission is located. As another example, all REs corresponding to an SL-PRS resource may be located in one time-frequency resource allocated for a PSCCH/PSSCH transmission.

An SL-PRS resource may be configured in an SL resource pool (e.g., referred to as a "dedicated SL-PRS resource pool") dedicated to transmission of an SL-PRS and/or corresponding control information and/or a corresponding measurement report. Optionally, a "dedicated SL-PRS resource pool" does not support PSCCH transmissions and/or PSSCH transmissions and/or PSFCH transmissions and/or other SL transmissions for non-positioning purposes.

An "SL-PRS resource pool" that is not a "dedicated SL-PRS resource pool" may be referred to as a "non-dedicated SL-PRS resource pool".

In an "SL-PRS resource grid", an SL-PRS sequence $r(m)$ corresponding to an SL-PRS transmission on the SL-PRS resource $i$ ($i \in \{0,1, ..., K_{comb}^{SLPRS}-1\}$) may be a sequence based on a pseudo-random sequence $c(n)$, for example,

$$r(m) = \frac{1}{\sqrt{2}}\big(1 - 2c(2m)\big) + j\frac{1}{\sqrt{2}}\big(1 - 2c(2m+1)\big)$$

where

$$c(n) = (x_1(n + N_c) + x_2(n + N_c)) \bmod 2,$$

$$x_1(n + 31) = (x_1(n + 3) + x_1(n)) \bmod 2,$$

and

$$x_2(n + 31) = (x_2(n + 3) + x_2(n + 2) + x_2(n + 1) + x_2(n)) \bmod 2$$

where $N_c = 1600$. $x_1(n)$ may be initialized as $x_1(0) = 0$, $x_1(1) = x_1(2) = \dots = x_1(30) = 0$. Initialization of $x_2(n)$ may be completed via an initial value $c_{\text{init}}$, where $c_{\text{init}} = \sum_{i=0}^{30} x_2(i) \cdot 2^i$.

$c_{\text{init}}$ may be related to one or more time-domain and/or frequency-domain parameters of the SL-PRS resource $i$, for example, the number ( $n_{s,f}^{\mu}$ ) of the slot in which the SL-PRS resource $i$ is located in the corresponding frame, the number ( $N_{\text{symb}}^{\text{slot}}$ ) of symbols in each slot, an "RE offset" ( $k_{\text{offset},i}^{\text{SLPRS}}$ ) of the SL-PRS resource $i$, or the lowest numbered RB (represented by $crb_{\text{start}}^{\text{SLPRS}}$ or $prb_{\text{start}}^{\text{SLPRS}}$ ) of the "SL-PRS resource grid". For example, for the symbol $l$, $c_{\text{init}}$ may be expressed as

$$c_{\text{init}} = \left( 2^{22} \left\lfloor \frac{n_{\text{ID,seq}}^{\text{SLPRS}}}{1024} \right\rfloor + 2^{10} \left( N_{\text{symb}}^{\text{slot}} n_{s,f}^{\mu} + l + 1 \right) \left( 2 \left( n_{\text{ID,seq}}^{\text{SLPRS}} \bmod 1024 \right) + 1 \right) \right.$$

$$\left. + \left( n_{\text{ID,seq}}^{\text{SLPRS}} \bmod 1024 \right) \right) \bmod 2^{31}$$

where $n_{\text{ID,seq}}^{\text{SLPRS}}$ is an "SL-PRS sequence ID". $n_{\text{ID,seq}}^{\text{SLPRS}}$ may be related to one or more time-domain and/or frequency-domain parameters of the SL-PRS resource $i$, for example, the number ( $n_{s,f}^{\mu}$ ) of the slot in which the SL-PRS resource $i$ is located in the corresponding frame, the number ( $N_{\text{symb}}^{\text{slot}}$ ) of symbols in each slot, an "RE offset" ( $k_{\text{offset},i}^{\text{SLPRS}}$ ) of the SL-PRS resource $i$, or the lowest numbered RB (represented by $crb_{\text{start}}^{\text{SLPRS}}$ or $prb_{\text{start}}^{\text{SLPRS}}$ ) of the "SL-PRS resource grid". For example, $n_{\text{ID,seq}}^{\text{SLPRS}} = k_{\text{offset},i}^{\text{SLPRS}}$ . As another example, $n_{\text{ID,seq}}^{\text{SLPRS}} = crb_{\text{start}}^{\text{SLPRS}}$ . As another example, $n_{\text{ID,seq}}^{\text{SLPRS}} = crb_{\text{start}}^{\text{SLPRS}} \cdot N_{\text{sc}}^{\text{RB}} + k_{\text{offset},i}^{\text{SLPRS}}$ . As another example, $n_{\text{ID,seq}}^{\text{SLPRS}} = prb_{\text{start}}^{\text{SLPRS}}$ . As another example, $n_{\text{ID,seq}}^{\text{SLPRS}} = prb_{\text{start}}^{\text{SLPRS}} \cdot N_{\text{sc}}^{\text{RB}} + k_{\text{offset},i}^{\text{SLPRS}}$ . $N_{\text{sc}}^{\text{RB}}$ represents the number of subcarriers in each RB, for example, $N_{\text{sc}}^{\text{RB}} = 12$ .

One or more measurements may be performed on the SL-PRS resource. For example, the measurement may be a reference signal received power (RSRP) measurement, and a corresponding measurement quantity may be referred to as SL-PRS RSRP. As another example, the measurement may be a reference signal time difference (RSTD) measurement, and a corresponding measurement quantity may be referred to as an SL-RSTD. As another example, the measurement may be an Rx-Tx time difference measurement, and a corresponding measurement quantity may be referred to as a UE Rx-Tx time difference. Each measurement quantity may correspond to one or more SL-PRS resources.

To implement transmission of a reference signal related to positioning and/or measurement of the reference signal and/or transmission and/or reception of a related measurement report, one or more "SL positioning procedures" may be defined. For example, a first SL positioning procedure may be used to set up and/or confirm a "positioning UE group". A second SL positioning procedure may enable a target UE to request one or more other UEs (for example, UEs already determined as "anchor UEs", and as another example, UEs not determined as "anchor UEs") to perform measurement on one or more SL-PRS resources and transmit a corresponding measurement report (for example, transmit the measurement report to the target UE, and as another example, transmit the measurement report to a network node). A third SL positioning procedure may enable a target UE to request one or more other UEs (for example, UEs already determined as "anchor UEs", and as another example, UEs not determined as "anchor UEs") to perform an SL-PRS transmission on one or more SL-PRS resources (for example, the "one or more other UEs" each transmits SL-PRSs on different SL-PRS resources). An SL-PRS resource corresponding to each SL-PRS transmission may be reserved and/or allocated by the target UE, or may be reserved and/or allocated by the UE that performs the SL-PRS transmission. Optionally, the functions of the second SL positioning procedure and the third SL positioning procedure may be combined in one SL positioning procedure (e.g., referred to as a "fourth SL positioning procedure"). For example, a target UE may request one or more other UEs to perform part or both of the following two items (e.g., in the request, the first item in the following may be indicated, or the second item in the following may be indicated, or both the first item and the second item in the following may be indicated):

- Performing measurement on one or more SL-PRS resources and transmitting a corresponding measurement report. For example, the "one or more other UEs" each performs measurement of a measurement quantity indicated by the target UE on an SL-PRS resource indicated by the target UE, and transmits a corresponding measurement report to the target UE (or a destination communication node indicated by the target UE).
- Performing SL-PRS transmission on one or more SL-PRS resources. For example, the "one or more other UEs" each performs an SL-PRS transmission on a unique SL-PRS resource allocated by the target UE.

In the first SL positioning procedure, a target UE transmits an "anchor UE request message". A UE (for example, referred to as a "responding node") receiving the "anchor UE request message" transmits an "anchor UE response message". Upon receiving the "anchor UE response message", the target UE may determine, according to a certain condition, whether to determine the "responding node" as an anchor UE. Optionally, the target UE may transmit an "anchor UE acknowledgement message" to the "responding node" (e.g., once the target UE determines the "responding node" as an anchor UE), wherein

- There may be one or more "responding nodes". For example, when the "anchor UE request message" is transmitted by means of broadcast or groupcast, there may be a plurality of "responding nodes". As another example, when the "anchor UE request message" is transmitted by means of unicast, there is one "responding node".
- The "anchor UE request message" may indicate one or more positioning methods to be used (e.g., a positioning method based on a Time Difference Of Arrival (TDOA), a positioning method based on an Angle of Departure (AoD), a positioning method based on an Angle of Arrival (AoA), and a positioning method based on a Round Trip Time (RTT) or multi-RTT). Accordingly, a UE supporting the one or more positioning methods may transmit, upon receiving the "anchor UE request message", the "anchor UE response message" as a response to the "anchor UE request message". A UE that does not support the one or more positioning methods may ignore the received "anchor UE request message".
- The "anchor UE request message" may indicate one or more measurement quantities to be used (e.g., SL-PRS RSRP, an SL-RSTD, and a UE Rx-Tx time difference). Accordingly, a UE supporting the one or more measurement quantities may transmit, upon receiving the "anchor UE request message", the "anchor UE response message" as a response to the "anchor UE request message". A UE that does not support the one or more measurement quantities may ignore the received "anchor UE request message".
- The "anchor UE request message" may indicate whether absolute positioning or relative positioning is to be performed.
- The "anchor UE request message" may indicate an SL ID of a corresponding "positioning UE group". The "positioning UE group" may be a positioning UE group which is formed by all anchor UEs and, optionally, the target UE after all the anchor UEs are determined. The SL ID of the "positioning UE group" may be generated by the target UE or may be acquired by the target UE from another communication node (for example, provided by the "other communication node" to the target UE according to the method in Embodiment 5 of the present invention).
- The "anchor UE request message" may be transmitted by means of broadcast, and accordingly, a "destination ID" of an SL transmission carrying the "anchor UE request message" may be a predefined or configured or pre-configured SL ID for broadcast. For example, this applies to a case where the target UE has not yet determined any anchor UE.

- The "anchor UE request message" may be transmitted by means of groupcast, and accordingly, a "destination ID" of an SL transmission carrying the "anchor UE request message" may be an SL ID of a corresponding "positioning UE group". For example, this may apply to a case where the target UE has acquired the SL ID of the "positioning UE group" according to the method in Embodiment 5 of the present invention.
- The "anchor UE request message" may be transmitted by means of unicast, and accordingly, a "destination ID" of an SL transmission carrying the "anchor UE request message" may be an SL ID of the "responding node". For example, this may apply to a case where the target UE requests a specific other UE to be an anchor UE.
- Any one of the "anchor UE request message", the "anchor UE response message", and the "anchor UE acknowledgement message" may correspond to information indicated in the physical layer in an SL transmission (e.g., information indicated in SCI), and/or information indicated in a higher layer (e.g., information indicated in the PC5-RRC layer, information indicated in a MAC header, or information indicated in a MAC CE).
- The "anchor UE response message" may indicate location information of the "responding node", e.g., a geographic position and velocity.
- A group member ID of the "responding node" in the corresponding "positioning UE group" may be indicated in the "anchor UE acknowledgement message". The "positioning UE group" may be a positioning UE group which is formed by all anchor UEs and, optionally, the target UE after all the anchor UEs are determined. The SL ID of the "positioning UE group" may be generated by the target UE or may be acquired by the target UE from another communication node (for example, provided by the "other communication node" to the target UE according to the method in Embodiment 5 of the present invention).
- The "anchor UE acknowledgement message" may indicate an SL ID of a corresponding "positioning UE group". The "positioning UE group" may be a positioning UE group which is formed by all anchor UEs and, optionally, the target UE after all the anchor UEs are determined. The SL ID of the "positioning UE group" may be generated by the target UE or may be acquired by the target UE from another communication node (for example, provided by the "other communication node" to the target UE according to the method in Embodiment 5 of the present invention).

Where applicable (e.g., in an in-coverage scenario), some or all of the functions of the first SL positioning procedure may be implemented in other ways. For example, the target UE or each anchor UE or another UE may generate an SL ID thereof, or acquire, from a network node according to the method in Embodiment 3 of the present invention, an SL ID allocated by the network node, and use same as an SL ID thereof. As another example, the target UE or each anchor UE or another UE may report, to a network node, information including the SL ID and/or the location information thereof according to the method in Embodiment 1 of the present invention or the method in Embodiment 2 of the present invention. As another example, a network node may determine, according to the method in Embodiment 4 of the present invention, an anchor UE set for the target UE, and provide to the target UE information of the anchor UE set (e.g., an SL ID and/or location information of each UE in the anchor UE set), and/or provide to each UE in the anchor UE set information of the target UE (e.g., the SL ID of the target UE). As another example, the network node may determine an SL ID for a corresponding "positioning UE group" according to the method in Embodiment 5 of the present invention, and provide to the target UE and each UE in the anchor UE set the SL ID of the "positioning UE group".

In the second SL positioning procedure, a target UE transmits a "measurement request message" (or referred to as a "measurement report request message"). A UE (e.g., referred to as a "responding node") receiving the "measurement request message" performs requested measurement, and respectively transmits to one or more "destination communication nodes" a "measurement response message" (or referred to as a "measurement report response message", or referred to as a "measurement report message"), wherein

- There may be one or more "responding nodes". For example, when the "measurement request message" is transmitted by means of broadcast or groupcast, there may be a plurality of "responding nodes". As another example, when the "measurement request message" is transmitted by means of unicast, there is one "responding node".
- The "responding node" may be a UE that has been determined as an anchor UE. For example, the "responding node" has been determined as an anchor UE by the target UE according to the first SL positioning procedure. As another example, the "responding node" has been determined as an anchor UE by a network node according to the method in Embodiment 4 of the present invention.
- The "responding node" may be a UE that is not determined as an anchor UE. For example, this may correspond to a case where the first SL positioning procedure does not need to be performed. Specifically, for example, the target UE may determine, as an anchor UE, a "responding UE" that has provided a useful measurement result thereto via the "measurement response message".
- The one or more "destination communication nodes" may include one or more of the following:

  ▪ The target UE.
  ▪ Another UE.

- A base station.
- A positioning server.

- The one or more "destination communication nodes" may be indicated in the "measurement request message" or be determined in a predefined or configured or pre-configured manner.
- The "measurement request message" may indicate the measurement quantity (e.g., the SL-PRS RSRP, an SL-RSTD, or a UE Rx-Tx time difference) corresponding to the requested measurement. Upon receiving the "measurement request message", a UE supporting the measurement quantity may perform the requested measurement and transmit the "measurement response message" as a response to the "measurement request message". A UE that does not support the measurement quantity may ignore the received "measurement request message".
- The "measurement request message" may indicate one or more SL-PRS resources. Accordingly, the "responding node" may perform the requested measurement on the one or more SL-PRS resources. Optionally, an SL-PRS resource (for example, a lowest numbered SL-PRS resource, or an earliest SL-PRS resource) among the one or more SL-PRS resources may be implicitly indicated. For example, the SL-PRS resource may be a SL-PRS resource associated with an SL transmission (e.g., a PSCCH transmission or a PSCCH/PSSCH transmission) carrying the "measurement request message".
- The "measurement request message" may be transmitted by means of groupcast. For example, a "destination identity" indicated in the "measurement request message" may be an SL ID of a corresponding "positioning UE group". Part or all of the information of the "positioning UE group" (e.g., the SL ID of the "positioning UE group", or the SL ID and/or the group member ID and/or the location information of each anchor UE in the "positioning UE group") may be determined by the target UE according to the first SL positioning procedure, or be acquired by the target UE according to the method in Embodiment 3 of the present invention. Accordingly, the "responding node" may be a UE that has been determined as an anchor UE. The SL ID of the "positioning UE group" may be determined by the "responding node" according to the first SL positioning procedure, or be provided by another communication node to the "responding node" according to the method in Embodiment 5 of the present invention.
- The "measurement request message" may be transmitted by means of broadcast, and accordingly, a "destination ID" of an SL transmission carrying the "measurement request message" may be a predefined or configured or pre-configured SL ID for broadcast. For example, this applies to a case where the target UE has not yet determined any anchor UE.
- The "measurement request message" may be transmitted by means of unicast, and accordingly, a "destination ID" of an SL transmission carrying the "measurement request message" may be an SL ID of an anchor UE that has been determined by the target UE.
- The "measurement response message" may be transmitted by means of unicast, and accordingly, a "destination ID" of an SL transmission carrying the "measurement response message" may be an SL ID of the target UE.
- The "measurement response message" may indicate a measurement result corresponding to requested measurement.
- The "measurement response message" may indicate location information of a "responding node" that transmits the "measurement response message".
- Either one of the "measurement request message" and the "measurement response message" may correspond to information indicated in the physical layer in an SL transmission (e.g., information indicated in SCI), and/or information indicated in a higher layer (e.g., information indicated in the PC5-RRC layer, information indicated in a MAC header, or information indicated in a MAC CE).

In the third SL positioning procedure, a target UE transmits an "SL-PRS transmission request message". A UE (e.g., referred to as a "responding node") receiving the "SL-PRS transmission request message" performs one or more SL-PRS transmissions requested by the "SL-PRS transmission request message". Optionally, before performing the one or more SL-PRS transmissions or after performing the one or more SL-PRS transmissions, the "responding node" transmits to the target UE an "SL-PRS transmission acknowledgement message", wherein

- There may be one or more "responding nodes". For example, when the "SL-PRS transmission request message" is transmitted by means of broadcast or groupcast, there may be a plurality of "responding nodes". As another example, when the "SL-PRS transmission request message" is transmitted by means of unicast, there is one "responding node".
- The "responding node" may be a UE that has been determined as an anchor UE. For example, the "responding node" has been determined as an anchor UE by the target UE according to the first SL positioning procedure. As another example, the "responding node" has been determined as an anchor UE by a network node according to the method in Embodiment 4 of the present invention.
- The "responding node" may be a UE that is not determined as an anchor UE. For example, this may correspond to a case where the first SL positioning procedure does not need to be performed. Specifically, for example, the target UE may determine, according to whether an "SL-PRS transmission acknowledgement message" is received, whether there is a "responding node" that is to perform an SL-PRS transmission on a corresponding SL-PRS resource.

- The "SL-PRS transmission request message" may indicate an SL-PRS resource set. Accordingly, the "responding node" may perform the SL-PRS transmission on an SL-PRS resource subset of the SL-PRS resource set. For example, the "responding node" (as an anchor UE) may determine the SL-PRS resource subset according to a group member ID thereof in a corresponding "positioning UE group". As a special case, there may be only one SL-PRS resource in each SL-PRS resource subset, and accordingly, the values 1, 2, ... of the group member IDs may correspond to SL-PRS resources indexed as 0, 1, ... in the SL-PRS resource set, respectively.
- The "SL-PRS transmission request message" may be transmitted by means of groupcast. For example, a "destination ID" indicated in the "SL-PRS transmission request message" may be an SL ID of a corresponding "positioning UE group". Part or all of the information of the "positioning UE group" (e.g., the SL ID of the "positioning UE group", or the SL ID and/or the group member ID and/or the location information of each anchor UE in the "positioning UE group") may be determined by the target UE according to the first SL positioning procedure, or be acquired by the target UE according to the method in Embodiment 3 of the present invention. Accordingly, the "responding node" may be a UE that has been determined as an anchor UE. The SL ID of the "positioning UE group" may be determined by the "responding node" according to the first SL positioning procedure, or be provided by another communication node to the "responding node" according to the method in Embodiment 5 of the present invention.
- The "SL-PRS transmission request message" may be transmitted by means of broadcast, and accordingly, a "destination ID" of an SL transmission carrying the "SL-PRS transmission request message" may be a predefined or configured or pre-configured SL ID for broadcast. For example, this applies to a case where the target UE has not yet determined any anchor UE.
- The "SL-PRS transmission request message" may be transmitted by means of unicast, and accordingly, a "destination ID" of an SL transmission carrying the "SL-PRS transmission request message" may be an SL ID of an anchor UE that has been determined by the target UE.
- The "SL-PRS transmission acknowledgement message" may be transmitted by means of unicast, and accordingly, a "destination ID" of an SL transmission carrying the "SL-PRS transmission acknowledgement message" may be an SL ID of the target UE.
- Either one of the "SL-PRS transmission request message" and the "SL-PRS transmission acknowledgement message" may correspond to information indicated in the physical layer in an SL transmission (e.g., information indicated in SCI), and/or information indicated in a higher layer (e.g., information indicated in the PC5-RRC layer, information indicated in a MAC header, or information indicated in a MAC CE).

**Embodiment 1**

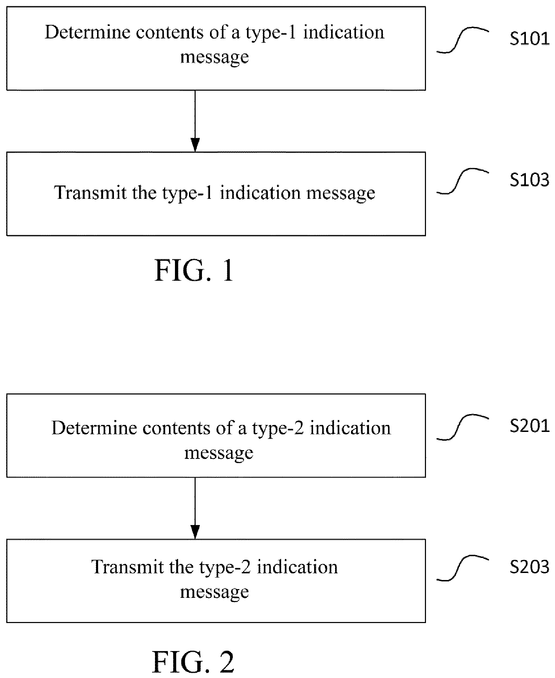

A method performed by a UE according to Embodiment 1 of the present invention will be described below with reference to FIG. 1.

FIG. 1 illustrates a flowchart corresponding to a method performed by a UE according to Embodiment 1 of the present invention.

As illustrated in FIG. 1, in Embodiment 1 of the present invention, the steps performed by the UE include: step S101 and step S103.

Specifically, in step S101, contents of a type-1 indication message are determined.

The type-1 indication message may include one or more UE information indications.

Some or all of the one or more UE information indications may relate to an SL.

Some or all of the one or more UE information indications may relate to positioning.

The type-1 indication message may be a message transmitted by the UE to a destination node. The destination node may be another UE or a network node (e.g., a base station or a positioning server).

The type-1 indication message may be an LTE positioning protocol (LPP) message (e.g., a *ProvideCapabilities* message or another LPP message).

The type-1 indication message may be an RRC message (e.g., a *UECapabilityInformation* message or another RRC message).

The type-1 indication message may be a PC5-RRC message (e.g., a *UECapabilityInformationSidelink* message or another PC5-RRC message).

The type-1 indication message may be a MAC message. For example, the type-1 indication message may be included in a MAC CE.

The type-1 indication message may be autonomously triggered by the UE.

The type-1 indication message may be triggered by a type-1 request message. For example, the UE receives the type-1 request message transmitted by the destination node and triggers the type-1 indication message as a response to the type-1 request message.

The type-1 request message may be an LPP message (e.g., a *RequestCapabilities* message or another LPP message).

The type-1 request message may be an RRC message (e.g., a *UECapabilityEnquiry* message or another RRC message).

The type-1 request message may be a PC5-RRC message (e.g., a *UECapabilityEnquirySidelink* message or another PC5-RRC message).

The type-1 request message may be a MAC message. For example, the type-1 request message may be included in a MAC CE.

The type-1 request message may include one or more requested UE information types (e.g., a UE capability type).

Optionally, if the type-1 indication message is triggered by the type-1 request message, the type-1 indication message must include the UE information type requested in the type-1 request message.

The one or more UE information indications may include one or more of the following:

- Whether the UE supports multiplexing an SL-PRS transmission in a PSCCH/PSSCH transmission.
- The maximum number of "SL-PRS resource pools" supported by the UE.
- Whether the UE supports a "dedicated SL-PRS resource pool".
- The maximum number of "dedicated SL-PRS resource pools" supported by the UE.
- Whether the UE supports a "non-dedicated SL-PRS resource pool".
- The maximum number of "non-dedicated SL-PRS resource pools" supported by the UE.
- Whether the UE may become an anchor UE (or whether the UE is interested in becoming an anchor UE, whether the UE is willing to become an anchor UE, or whether the UE supports becoming an anchor UE).
- SL carrier information (e.g., the SL carrier information including information of one or more SL carrier frequencies) supported by the UE and used for positioning.
- One or more SL positioning methods supported by the UE, for example, a positioning method based on a TDOA, and/or a positioning method based on an AoD, and/or a positioning method based on an AoA, and/or a positioning method based on an RTT or multi-RTT.
- One or more measurement quantities supported by the UE and used for SL positioning, e.g., SL-PRS RSRP, and/or an SL-RSTD, and/or an Rx-Tx time difference.
- An SL ID (e.g., denoted as $ID_{self}$) of the UE.
- An SL ID (e.g., denoted as $ID_{grp}$) of a "positioning UE group" in which the UE is located).
- Location information of the UE. For example, the location information may include the geographic position of the UE and/or the velocity of the UE.
- Information of a potential anchor UE. For example, the "information of a potential anchor UE" may include information of one or more potential anchor UEs (for example, respectively denoted as $UE_0^{pot,anc}$, $UE_1^{pot,anc}$, ..., $UE_{N_{anc}^{UE}-1}^{pot,anc}$). For $i \in \{0, 1, ..., N_{pot,anc}^{UE} - 1\}$, information of $UE_i^{pot,anc}$ may include one or more of the following:

  - An SL ID (e.g., denoted as $ID_i^{pot,anc}$) of $UE_i^{pot,anc}$.
  - Location information of $UE_i^{pot,anc}$. For example, the location information may include the geographic position of $UE_i^{pot,anc}$ and/or the velocity of $UE_i^{pot,anc}$.

In addition, in step S103, the type-1 indication message is transmitted. For example, the type-1 indication message is transmitted to the destination node.

In Embodiment 1 of the present invention, part or all of the "information of a potential anchor UE" may be determined by the UE according to control information (e.g., "SL-PRS control information" or other control information) received on an SL. For example, if the control information transmitted by UE-A indicates that UE-A may become an anchor UE (or is interested in becoming an anchor UE, is willing to become an anchor UE, or supports becoming an anchor UE), the UE may list UE-A as a "potential anchor UE".

Thus, according to the description of Embodiment 1, provided in the present invention is a method, wherein a UE (e.g., a potential target UE or a potential anchor UE) reports an SL ID and/or location information, etc., thereof to a central node (e.g., a positioning server), so that the central node may quickly determine one or more suitable anchor UEs for any target UE and efficiently determine a corresponding "positioning UE group".

**Embodiment 2**

A method performed by a UE according to Embodiment 2 of the present invention will be described below with reference to FIG. 2.

FIG. 2 illustrates a flowchart corresponding to a method performed by a UE according to Embodiment 2 of the present invention.

As illustrated in FIG. 2, in Embodiment 2 of the present invention, the steps performed by the UE include: step S201 and step S203.

Specifically, in step S201, contents of a type-2 indication message are determined.

The type-2 indication message may include one or more indications related to positioning (e.g., location information or a measurement result). Part or all of the one or more indications related to positioning may relate to an SL.

The type-2 indication message may be a message transmitted by the UE to a destination node. The destination node may be another UE or a network node (e.g., a base station or a positioning server).

The type-2 indication message may be an LPP message (e.g., a *ProvideLocationInformation* message, a *ProvideSidelinkInformation* message, or another LPP message).

The type-2 indication message may be an RRC message (e.g., a *UELocationInformation* message or another RRC message).

The type-2 indication message may be a PC5-RRC message (e.g., a *UELocationInformationSidelink* message or another PC5-RRC message).

The type-2 indication message may be a MAC message. For example, the type-2 indication message may be included in a MAC CE.

The type-2 indication message may be autonomously triggered by the UE.

The type-2 indication message may be triggered by a type-2 request message. For example, the UE receives the type-2 request message transmitted by the destination node and triggers the type-2 indication message as a response to the type-2 request message.

The type-2 request message may be an LPP message (e.g., a *RequestLocationInformation* message, a *RequestSidelinkInformation* message, or another LPP message).

The type-2 request message may be an RRC message (e.g., a *UELocationInformationEnquiry* message or another RRC message).

The type-2 request message may be a PC5-RRC message (e.g., a *UELocationInformationEnquirySidelink* message or another PC5-RRC message).

The type-2 request message may be a MAC message. For example, the type-2 request message may be included in a MAC CE.

Optionally, the type-2 request message may include a requested SL positioning information type. For example, possible values of the requested SL positioning information type may include "information of a potential anchor UE is required" *(potentialAnchorUEsRequired)*.

Optionally, the type-2 request message may include a requested location information type and, optionally, a quality of service (QoS) that may be associated with the requested location information type. For example, possible values of the requested location information type may include "location estimation is required" (*locationEstimateRequired*) and/or "location measurement is required" (*locationMeasurementsRequired*) and/or "location estimation is preferred" (*locationEstimatePreferred*) and/or "location measurement is preferred" (*locationMeasurementsPreferred*).

Optionally, if the type-2 indication message is triggered by the type-2 request message, the type-2 indication message must include the SL positioning information type and/or the location information type requested in the type-2 request message.

Optionally, if the type-2 indication message is triggered by the type-2 request message, indication information provided in the type-2 indication message must match SL positioning information and/or location information requested in the type-2 request message or a subset of the SL positioning information and/or the location information requested in the type-2 request message.

The one or more indications related to positioning may include one or more of the following:

- Whether the UE may become an anchor UE (or whether the UE is interested in becoming an anchor UE, whether the UE is willing to become an anchor UE, or whether the UE supports becoming an anchor UE).

- SL carrier information (e.g., the SL carrier information including information of one or more SL carrier frequencies) supported by the UE and used for positioning.
- One or more SL positioning methods supported by the UE, for example, a positioning method based on a TDOA, and/or a positioning method based on an AoD, and/or a positioning method based on an AoA, and/or a positioning method based on an RTT or multi-RTT.
- One or more measurement quantities supported by the UE and used for SL positioning, e.g., SL-PRS RSRP, and/or an SL-RSTD, and/or an Rx-Tx time difference.
- An SL ID (e.g., denoted as $ID_{self}$) of the UE.
- An SL ID (e.g., denoted as $ID_{grp}$) of a "positioning UE group" in which the UE is located.
- Location information of the UE. For example, the location information may include the geographic position of the UE and/or the velocity of the UE.
- Information of a potential anchor UE. For example, the "information of a potential anchor UE" may include information of one or more potential anchor UEs (for example, respectively denoted as

$$UE_0^{pot,anc}, \quad UE_1^{pot,anc}, \ldots, \quad UE_{N_{anc}^{UE}-1}^{pot,anc}) \qquad i \in \{0, 1, \ldots, N_{pot,anc}^{UE} - 1\}$$

. For , information of

$$UE_i^{pot,anc}$$

may include one or more of the following:

- An SL ID (e.g., denoted as $ID_i^{pot,anc}$) of $UE_i^{pot,anc}$.
- Location information of $UE_i^{pot,anc}$. For example, the location information may include the geographic position of $UE_i^{pot,anc}$ and/or the velocity of $UE_i^{pot,anc}$.

In addition, in step S203, the type-2 indication message is transmitted. For example, the type-2 indication message is transmitted to the destination node.

In Embodiment 1 of the present invention, part or all of the "information of a potential anchor UE" may be determined by the UE according to control information (e.g., "SL-PRS control information" or other control information) received on an SL. For example, if the control information transmitted by UE-A indicates that UE-A may become an anchor UE (or is interested in becoming an anchor UE, is willing to become an anchor UE, or supports becoming an anchor UE), the UE may list UE-A as a "potential anchor UE".

Thus, according to the description of Embodiment 2, provided in the present invention is a method, wherein a UE (e.g., a potential target UE, or a potential anchor UE) reports an SL ID and/or location information, etc., thereof to a central node (e.g., a positioning server), so that the central node may quickly determine one or more suitable anchor UEs for any target UE and efficiently determine a corresponding "positioning UE group".

**Embodiment 3**

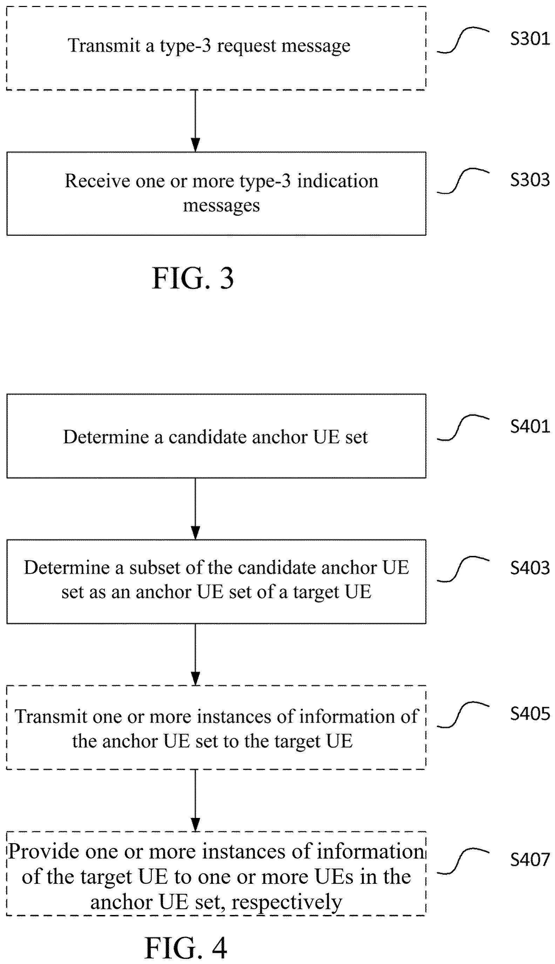

A method performed by a UE according to Embodiment 3 of the present invention will be described below with reference to FIG. 3.

FIG. 3 illustrates a flowchart corresponding to a method performed by a UE according to Embodiment 3 of the present invention.

As illustrated in FIG. 3, in Embodiment 3 of the present invention, the steps performed by the UE include: step S301 and step S303.

Specifically, optionally, in step S301, a type-3 request message is transmitted. For example, the type-3 request message is transmitted to a destination node. The destination node may be another UE or a network node (e.g., a base station or a positioning server).

The type-3 request message may be used to request assistance data which is related to positioning.

The type-3 request message may be an LPP message (e.g., a *RequestAssistanceData* message or another LPP message).

The type-3 request message may be an RRC message (e.g., a *UEAssistanceEnquiry* message or another RRC message).

The type-3 request message may be a PC5-RRC message (e.g., a *UEAssistanceEnquirySidelink* message or another PC5-RRC message).

The type-3 request message may be a MAC message. For example, the type-3 request message may be included in a MAC CE.

The type-3 request message may include a request for "anchor UE information". For example, the UE, as a target UE that needs to determine the geographic position thereof, requests the destination node to provide, to the UE, information of one or more anchor UEs that may provide support for a positioning operation of the UE.

The type-3 request message may include a request for an "SL ID". For example, the UE, as a target UE that needs to determine the geographic position thereof, requests the destination node to allocate, to the UE, an SL ID that may be used to identify the UE when an operation which is related to positioning is performed on an SL. As another example, the UE, as an "anchor UE" that may provide support for a positioning operation of another UE, requests the destination node to allocate, to the UE, an SL ID that may be used to identify the UE when an operation which is related to positioning is performed on an SL.

The type-3 request message may include a request for "target UE information". For example, the UE, as an "anchor UE" that may provide support for a positioning operation of another UE, requests the destination node to provide, to the UE, information of a corresponding target UE.

The type-3 request message may include a request for "positioning UE group information". For example, the UE, as a "target UE" or an "anchor UE", requests the destination node to provide, to the UE, information of a positioning UE group (e.g., an SL ID of the positioning UE group) in which the UE is located.

Further, in step S303, one or more type-3 indication messages are received. For example, the one or more type-3 indication messages transmitted by the destination node are received.

The one or more type-3 indication messages may be autonomously triggered by the destination node. For example, this applies to a case where the UE does not perform step S301.

The one or more type-3 indication messages may be triggered by the type-3 request message. For example, the type-3 indication message may be a response of the destination node to the type-3 request message that is received by the destination node and transmitted by the UE in step S301.

The one or more type-3 indication messages may be used to indicate one or more instances of assistance data related to positioning.

Each type-3 indication message may be an LPP message (e.g., a *ProvideAssistanceData* message or another LPP message).

Each type-3 indication message may be an RRC message (e.g., a *UEAssistanceData* message or another RRC message).

Each type-3 indication message may be a PC5-RRC message (e.g., a *UEAssistanceDataSidelink* message or another PC5-RRC message).

Each type-3 indication message may be a MAC message. For example, the type-3 indication message may be included in a MAC CE.

The one or more instances of assistance data related to positioning may include "anchor UE information" (for example, this may apply to a case where the UE is a target UE). The "anchor UE information" may include information of one or more anchor UEs (for example, respectively denoted as $UE_0^{anc}, UE_1^{anc}, \ldots, UE_{N_{anc}^{UE}-1}^{anc}$). For $i \in \{0, 1, \ldots, N_{anc}^{UE} - 1\}$, information of $UE_i^{anc}$ may include one or more of the following:

- An SL ID (e.g., denoted as $ID_i^{anc}$) of $UE_i^{anc}$

- A group member ID of $UE_i^{anc}$.

- Location information of $UE_i^{anc}$. For example, the location information may include the geographic position of $UE_i^{anc}$ and/or the velocity of $UE_i^{anc}$.

The "anchor UE information" may be determined by the destination node according to the method in Embodiment 4 of the present invention, or may be provided by another communication node to the destination node according to the method in Embodiment 4 of the present invention.

The one or more instances of assistance data related to positioning may include an SL ID (e.g., denoted as $ID_{asn}$) allocated to the UE. $ID_{asn}$ may be used to identify the UE on an SL (for example, identify the UE in one or more "SL positioning procedures"). For example, this may apply to a case where the UE is a target UE, or to a case where the UE is an anchor UE, or to a case where the UE supports positioning which is based on an SL.

The one or more instances of assistance data related to positioning may include "target UE information" that may include an SL ID (e.g., denoted as $ID_{tgt}$) of a target UE. $ID_{tgt}$ may be used to identify the target UE on an SL (for example, identify the target UE in one or more "SL positioning procedures"). For example, this may apply to a case where the UE is an anchor UE.

The destination node may determine $ID_{tgt}$ in one or more ways. For example, $ID_{tgt}$ may be an SL ID of the target UE provided by the target UE to the destination node according to the method in Embodiment 1 of the present invention. As another example, $ID_{tgt}$ may be an SL ID of the target UE provided by the target UE to the destination node according to the method in Embodiment 2 of the present invention. As another example, $ID_{tgt}$ may be an SL ID allocated by the destination node to the target UE according to the method in Embodiment 3 of the present invention.

The one or more instances of assistance data related to positioning may include "positioning UE group information". The "positioning UE group information" may include an SL ID of a "positioning UE group" (e.g., a "positioning UE group" in which the UE is located) and, optionally, the "anchor UE information" and, optionally, the "target UE information". The SL ID of the "positioning UE group" may be allocated by the destination node or be acquired by the destination node in another manner.

Thus, according to the description of Embodiment 3, provided in the present invention is a method, wherein a central node (e.g., a positioning server) respectively transmits, to a target UE and/or each determined anchor UE, respectively required information about a corresponding "positioning UE group", so that the target UE may directly transmit, on an SL, an SL-PRS to one or more determined anchor UEs and/or measure an SL-PRS transmitted by the one or more anchor UEs, without searching for a suitable anchor UE on the SL in advance. In addition, the central node respectively allocates SL IDs to all UEs in the "positioning UE group", thereby preventing conflict of SL IDs of different UEs in the "positioning UE group".

**Embodiment 4**

A method performed by a communication node according to Embodiment 4 of the present invention will be described below with reference to FIG. 4. The communication node may be a UE or a network node (e.g., a base station or a positioning server).

FIG. 4 illustrates a flowchart corresponding to a method performed by a communication node according to Embodiment 4 of the present invention.

As illustrated in FIG. 4, in Embodiment 4 of the present invention, the steps performed by the communication node include: step S401, step S403, step S405, and step S407.

Specifically, in step S401, a candidate anchor UE set is determined. For example, the candidate anchor UE set may be denoted as $A_{anc}^{cand}$. The number of elements in the set $A_{anc}^{cand}$ may be denoted as $N_{cand}^{UE}$. $N_{cand}^{UE}$ may be an integer greater than or equal to 0, or an integer greater than or equal to 1. For $N_{cand}^{UE} = 0$, $A_{anc}^{cand} = \emptyset$. For

$$N_{cand}^{UE} \geq 1, \ A_{anc}^{cand} = \{UE_0^{cand}, UE_1^{cand}, ..., UE_{N_{cand}^{UE}-1}^{cand}\}.$$

Optionally, the set $A_{anc}^{cand}$ may be initialized to be an empty set.

Optionally, whether to add a UE (e.g., denoted as $UE_{pot}^{cand}$) to the set $A_{anc}^{cand}$ may be determined according to information including one or more of the following:

- Information about $UE_{pot}^{cand}$ provided by $UE_{pot}^{cand}$ to the communication node. For example, $UE_{pot}^{cand}$ (as a target UE, or not as a target UE) provides the information about $UE_{pot}^{cand}$ to the communication node according to the method in Embodiment 1 of the present invention. As another example, $UE_{pot}^{cand}$ (as a target UE, or not as a target UE) provides the information about $UE_{pot}^{cand}$ to the communication node according to the method in Embodiment 2 of the present invention.

- Location information of $UE_{pot}^{cand}$ (as a target UE), e.g., a geographic position or velocity, which is determined by the communication node according to measurement information provided by $UE_{pot}^{cand}$ and/or one or more other communication nodes, and/or other information. Each other communication node may be a UE or a network node (e.g., a base station or a positioning server).

- Information about $UE_{pot}^{cand}$ provided by one or more network nodes to the communication node. Each source network node may be a base station or a positioning server.

- Information about $UE_{pot}^{cand}$ provided to the communication node by one or more UEs (for example, a set corresponding thereto is denoted as $A_{other}$). For example, a UE in the set $A_{other}$ according to the method in Embodiment 1 of the present invention, provides "information of a potential anchor UE" to the communication node, which includes the information of $UE_{pot}^{cand}$. As another example, a UE in the set $A_{other}$ according to the method in Embodiment 2 of the present invention, provides the "information of a potential anchor UE" to the communication node, which includes the information of $UE_{pot}^{cand}$.

Optionally, only a UE that indicates to the communication node that the UE may become an anchor UE (or is interested in becoming an anchor UE, is willing to become an anchor UE, or supports becoming an anchor UE) may be added to the set $A_{anc}^{cand}$. For example, the communication node may select zero or one or more UEs to be added to the set $A_{anc}^{cand}$ from all UEs that indicate to the communication node that the UEs may become an anchor UE (or are interested in becoming an anchor UE, are willing to become an anchor UE, or support becoming an anchor UE).

Optionally, the communication node may determine, on the basis of the implementation thereof, which UE(s) to be added to the set $A_{anc}^{cand}$.

The set $A_{anc}^{cand}$ may change over time. For example, if information of a candidate anchor UE (e.g., $UE_i^{cand}$, where $i \in \{0, 1, \ldots, N_{cand}^{UE} - 1\}$) in the set $A_{anc}^{cand}$ has expired, $UE_i^{cand}$ may be removed from the set $A_{anc}^{cand}$. An expiration condition of the information of $UE_i^{cand}$ may include one or more of the following (according to any combination of "and" and/or "or"):

- An elapsed time since the addition of $UE_i^{cand}$ to the set $A_{anc}^{cand}$ is greater than (or, greater than or equal to) $T_{anc}^{cand}$

- An elapsed time since the last update of information of $UE_i^{cand}$ is greater than (or, greater than or equal to) $T_{anc}^{cand}$.

$T_{anc}^{cand}$ may be a predefined or configured or pre-configured value, or may be determined by one or more predefined or configured or pre-configured values.

Optionally, each candidate anchor UE in the set $A_{anc}^{cand}$ is associated with one or more candidate anchor UE parameters. For example, for $i \in \{0, 1, \ldots, N_{cand}^{UE} - 1\}$, $UE_i^{cand}$ is associated with one or more of the following:

- An SL ID (e.g., denoted as $ID_i^{cand}$) of $UE_i^{cand}$. $ID_i^{cand}$ may be provided by $UE_i^{cand}$ to the communication node, may be provided by a UE in the set $A_{other}$ to the communication node, may be provided by a base station to the communication node, or may be allocated by the communication node to $UE_i^{cand}$. Specifically, for example, $ID_i^{cand}$ may be an SL ID of $UE_i^{cand}$ provided by $UE_i^{cand}$ to the communication node according to the method in Embodiment 1 of the present invention. As another example, $ID_i^{cand}$ may be an SL ID of a potential anchor UE in the "information of a potential anchor UE" provided by a UE in the set $A_{other}$ to the communication node according to the method in Embodiment 1 of the present invention, and the potential anchor UE is $UE_i^{cand}$. As another example, $ID_i^{cand}$ may be an SL ID of $UE_i^{cand}$ provided by $UE_i^{cand}$ to the communication node according to the method in Embodiment 2 of the present invention. As another example, $ID_i^{cand}$ may be an SL ID of a potential anchor UE in the "information of potential anchor UE" provided by a UE in the set $A_{other}$ to the communication node according to the method in Embodiment 2 of the present invention, and the potential anchor UE is $UE_i^{cand}$. As another example, $ID_i^{cand}$ may be an SL ID allocated by the communication node to $UE_i^{cand}$ according to the method in Embodiment 3 of the present invention.

- Location information of $UE_i^{cand}$. For example, the location information may include the geographic position of $UE_i^{cand}$ and/or the velocity of $UE_i^{cand}$.

In addition, in step S403, a subset of the candidate anchor UE set is determined as an anchor UE set of a target UE. For example, the target UE may be denoted as $UE_{tgt}$. The anchor UE set may be denoted as $A_{anc}^{tgt}$ The number of elements in the set $A_{anc}^{tgt}$ may be denoted as $N_{anc}^{tgt}$. $N_{anc}^{tgt}$ may be an integer greater than or equal to 0. For $N_{anc}^{tgt} = 0$, $A_{anc}^{tgt} = \emptyset$. For $N_{anc}^{tgt} \geq 1$, $A_{anc}^{tgt} = \{UE_{a_0}^{cand}, UE_{a_1}^{cand}, ..., UE_{a_{N_{anc}^{tgt}-1}}^{cand}\}$, where for $k \in \{0, 1, ..., N_{anc}^{tgt} - 1\}$, $a_k$ is an integer satisfying $0 \leq a_k \leq N_{cand}^{UE} - 1$.

The set $A_{anc}^{tgt}$ may be determined in one or more ways. For example, for $i \in \{0, 1, ..., N_{cand}^{UE} - 1\}$, if $UE_i^{cand}$ satisfies an anchor UE condition, $UE_i^{cand}$ is added to the set $A_{anc}^{tgt}$. Optionally, for $UE_i^{cand}$, the anchor UE condition may be determined by the communication node according to the implementation thereof. Optionally, for $UE_i^{cand}$, the anchor UE condition may include one or more of the following (according to any combination of "and" and/or "or"):

- Location information of $UE_i^{cand}$ is available.
- $UE_i^{cand}$ and $UE_{tgt}$ are configured with one or more identical serving cells.
- $UE_i^{cand}$ and $UE_{tgt}$ are configured with one or more identical transmissionreception points (TRPs).
- $UE_i^{cand}$ and $UE_{tgt}$ are not the same UE.

Optionally, $UE_{tgt}$ may be a UE in the set $A_{other}$.
Optionally, $UE_{tgt}$ may be associated with one or more target UE parameters. For example, the one or more target UE parameters may include an SL ID (e.g., denoted as $ID_{tgt}$) of $UE_{tgt}$.

Optionally, after the set $A_{anc}^{tgt}$ is determined, a group member ID corresponding to each UE in the set $A_{anc}^{tgt}$ is further determined. For example, group member IDs sequentially allocated in ascending order of the SL IDs of each UE are 1, 2, ..., $N_{anc}^{tgt}$.

The communication node may acquire $ID_{tgt}$ in one or more ways. For example, $ID_{tgt}$ may be provided by $UE_{tgt}$ to the communication node, may be provided by a UE in the set $A_{other}$ to the communication node, may be provided by a base station to the communication node, or may be allocated by the communication node to $UE_{tgt}$. Specifically, for example, $ID_{tgt}$

may be an SL ID of $UE_{tgt}$ provided by $UE_{tgt}$ to the communication node according to the method in Embodiment 1 of the present invention. As another example, $ID_{tgt}$ may be an SL ID of a potential anchor UE in the "information of a potential anchor UE" provided by a UE in the set $A_{other}$ to the communication node according to the method in Embodiment 1 of the present invention, and the potential anchor UE is $UE_{tgt}$. As another example, $ID_{tgt}$ may be an SL ID of $UE_{tgt}$ provided by $UE_{tgt}$ to the communication node according to the method in Embodiment 2 of the present invention. As another example, $ID_{tgt}$ may be an SL ID of a potential anchor UE in the "information of a potential anchor UE" provided by a UE in the set $A_{orher}$ to the communication node according to the method in Embodiment 2 of the present invention, and the potential anchor UE is $UE_{tgt}$. As another example, $ID_{tgt}$ may be an SL ID allocated by the communication node to $UE_{tgt}$ according to the method in Embodiment 3 of the present invention.

In addition, optionally, in step S405, one or more instances of information of the anchor UE set are provided to the target UE.

For example, one or more instances of information (e.g., an SL ID, location information, or a group member ID) of each UE in the set $A_{anc}^{tgt}$ are provided to $UE_{tgt}$ via the method in Embodiment 3 of the present invention. Specifically, for example, one or more instances of information (e.g., an SL ID, location information, or a group member ID) of each UE in the set $A_{anc}^{tgt}$ are provided to $UE_{tgt}$ via one or more assistance data indication messages. The one or more assistance data indication messages may correspond to the "one or more assistance data indication messages" in step S303 in Embodiment 3 of the present invention.

In addition, optionally, in step S407, one or more instances of information of the target UE are provided to one or more UEs in the anchor UE set, respectively.

For example, for $k = 0, 1, ..., N_{anc}^{tgt} - 1$, one or more instances of information (e.g., an SL ID) of $UE_{tgt}$ are respectively provided to $UE_{a_k}^{cand}$ via the method in Embodiment 3 of the present invention. Specifically, for example, one or more instances of information (e.g., an SL ID) of $UE_{tgt}$ are provided to $UE_{a_k}^{cand}$ via one or more assistance data indication messages. The one or more assistance data indication messages may correspond to the "one or more assistance data indication messages" in step S303 in Embodiment 3 of the present invention.

In Embodiment 4 of the present invention, it is possible to perform only step S405 without performing step S407.
In Embodiment 4 of the present invention, it is possible to perform only step S407 without performing step S405.
In Embodiment 4 of the present invention, it is possible to perform step S405 first, and then perform step S407.
In Embodiment 4 of the present invention, it is possible to perform step S407 first, and then perform step S405.
In Embodiment 4 of the present invention, it is possible to perform step S405 and step S407 simultaneously.
Thus, according to the description of Embodiment 4, provided in the present invention is a method, wherein a central node (e.g., a positioning server) determines, for a target UE, one or more suitable anchor UEs from a plurality of potential anchor UEs, and respectively transmits related information to all related UEs, thereby reducing a positioning delay caused by the target UE independently determining an anchor UE set and improving positioning efficiency.

**Embodiment 5**

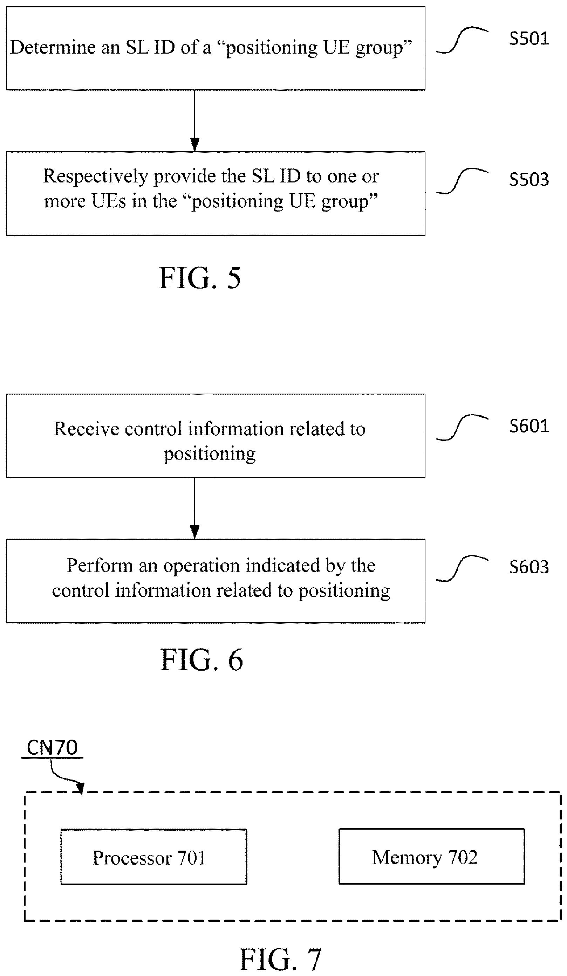

A method performed by a communication node according to Embodiment 5 of the present invention will be described below with reference to FIG. 5. The communication node may be a UE or a network node (e.g., a base station or a positioning server).
FIG. 5 illustrates a flowchart corresponding to a method performed by a communication node according to Embodiment 5 of the present invention.
As illustrated in FIG. 5, in Embodiment 5 of the present invention, the steps performed by the communication node include: step S501 and step S503.
Specifically, in step S501, an SL ID (e.g., denoted as $ID_{grp,0}$) of a "positioning UE group" is determined. The "positioning UE group" may include one or more anchor UEs (e.g., a corresponding anchor UE set may be denoted as $A_{anc}^{tgt} = \{UE_{a_0}^{cand}, UE_{a_1}^{cand}, ..., UE_{a_{N_{anc}^{tgt}-1}}^{cand}\}$ and, optionally, a target UE (e.g., denoted as $UE_{tgt}$). For example, the set $A_{anc}^{tgt}$ may be determined by the communication node according to the method in Embodiment 4 of the present invention, or may be provided by another communication node to the communication node according to the method in Embodiment 4 of the present invention.
$ID_{grp,0}$ may be generated by the communication node.

$ID_{grp,0}$ may be provided by another communication node to the communication node.

$ID_{grp,0}$ may correspond to $ID_{grp}$ provided by $UE_{tgt}$ to the communication node according to the method in Embodiment 1 of the present invention.

$ID_{grp,0}$ may correspond to $ID_{grp}$ provided by $UE_{tgt}$ to the communication node according to the method in Embodiment 2 of the present invention.

In addition, in step S503, the SL ID is respectively provided to one or more UEs in the "positioning UE group".

For example, for $k = 0, 1, \ldots, N_{anc}^{tgt} - 1$, $ID_{grp,0}$ is respectively provided to $UE_{a_k}^{cand}$ via the method in Embodiment 3 of the present invention. Specifically, for example, $ID_{grp,0}$ is provided to $UE_{a_k}^{cand}$ via one or more assistance data indication messages. The one or more assistance data indication messages may correspond to the "one or more assistance data indication messages" in Embodiment 3 of the present invention.

As another example, $ID_{grp,0}$ is provided to $UE_{tgt}$ via the method in Embodiment 3 of the present invention. Specifically, for example, $ID_{grp,0}$ is provided to $UE_{tgt}$ via one or more assistance data indication messages. The one or more assistance data indication messages may correspond to the "one or more assistance data indication messages" in Embodiment 3 of the present invention.

Optionally, Embodiment 5 of the present invention may be a part of Embodiment 4 of the present invention. For example, in Embodiment 4 of the present invention, after the set $A_{anc}^{tgt}$ is determined, a corresponding $ID_{grp,0}$ may be additionally determined. As another example, in Embodiment 4 of the present invention, $ID_{grp,0}$ and/or one or more instances of information of each UE in the set $A_{anc}^{tgt}$ are provided to $UE_{tgt}$. As another example, in Embodiment 4 of the present invention, for $k = 0, 1, \ldots, N_{anc}^{tgt} - 1$, $ID_{grp,0}$ and/or one or more instances of information of $UE_{tgt}$ are provided to $UE_{a_k}^{cand}$.

Thus, according to the description of Embodiment 5, provided in the present invention is a method, wherein a central node (e.g., a positioning server) determines an SL ID for a "positioning UE group", thereby preventing conflict of SL IDs of different "positioning UE groups" in a positioning procedure based on an SL, and reducing the risk of transmitting and/or receiving erroneous reference signals related to positioning and/or measurement information on an SL.

**Embodiment 6**

A method performed by a UE according to Embodiment 6 of the present invention will be described below with reference to FIG. 6.

FIG. 6 illustrates a flowchart corresponding to a method performed by a UE according to Embodiment 6 of the present invention.

As illustrated in FIG. 6, in Embodiment 6 of the present invention, the steps performed by the UE include: step S601 and step S603.

Specifically, in step S601, control information related to positioning is received.

The "control information related to positioning" may be transmitted by a source node.

The "control information related to positioning" may be transmitted on a DL, and accordingly, the source node may be a network node (e.g., a base station or a positioning server).

The "control information related to positioning" may be transmitted on an SL, and accordingly, the source node may be another UE.

The "control information related to positioning" may be downlink control information (DCI), or may be included in DCI.

The "control information related to positioning" may be sidelink control information (SCI), or may be included in SCI.

The "control information related to positioning" may be included in a message of a higher layer protocol (e.g., an LPP message, an RRC message, a PC5-RRC message, or a MAC message).

The "control information related to positioning" may indicate an SL-PRS resource set. For example, the SL-PRS resource set may be denoted as $A_{PRS}^{SL}$. The number of elements in the set $A_{PRS}^{SL}$ may be denoted as $N_{PRS}^{SL}$. may be an integer greater than or equal to 0 or an integer greater than or equal to 1. For $N_{PRS}^{SL} = 0$, $A_{PRS}^{SL} = \emptyset$. For $N_{PRS}^{SL} \geq 1$,

$$A_{PRS}^{SL} = \{r_0^{SLPRS}, r_1^{SLPRS}, \dots, r_{N_{PRS}^{SL}-1}^{SLPRS}\}$$

$N_{PRS}^{SL}$ may be a value less than (or less than or equal to, or equal to) $N_{PRS,max}^{SL}$. $N_{PRS,max}^{SL}$ may be a predefined or configured or pre-configured value, or may be determined by one or more predefined or configured or pre-configured values. For example, $N_{PRS,max}^{SL} = 1$.

The set $A_{PRS}^{SL}$ may be divided into one or more subsets (e.g., respectively denoted as sets $A_{PRS,0}^{SL}$, $A_{PRS,1}^{SL}$, ..., $A_{PRS,N_{PRS,sub}^{SL}-1}^{SL}$). $N_{PRS,sub}^{SL}$ may be an integer greater than or equal to 1. The "control information related to positioning" may respectively indicate sets $A_{PRS,0}^{SL}$, $A_{PRS,1}^{SL}$, ..., $A_{PRS,N_{PRS,sub}^{SL}-1}^{SL}$.

For $i \in \{0, 1, \dots, N_{PRS}^{SL} - 1\}$, an SL-PRS resource $r_i^{SLPRS}$ may be associated with one or more operations related to positioning. The one or more operations related to positioning associated with the SL-PRS resource $r_i^{SLPRS}$ may be indicated by the "control information related to positioning", or may be determined in a predefined or configured or pre-configured manner. The one or more operations related to positioning associated with the SL-PRS resource $r_i^{SLPRS}$ may each include one of a plurality of operations including some or all of the following:

- Performing measurement on the SL-PRS resource $r_i^{SLPRS}$. A corresponding measurement quantity may be indicated by the "control information related to positioning" (e.g., the operation may be expressed as "performing XXX measurement on the SL-PRS resource $r_i^{SLPRS}$", where XXX is the indicated measurement quantity), or may be determined in a predefined or configured or pre-configured manner. Specifically, for example, the "control information related to positioning" may indicate that SL-PRS RSRP measurement is performed on the SL-PRS resource $r_i^{SLPRS}$. As another example, the "control information related to positioning" may indicate that SL-RSTD measurement is performed on the SL-PRS resource $r_i^{SLPRS}$. As another example, the "control information related to positioning" may indicate that Rx-Tx time difference measurement is performed on the SL-PRS resource $r_i^{SLPRS}$. The measurement quantity may correspondingly include one or more SL-PRS resources of the SL-PRS resource $r_i^{SLPRS}$.

- Transmitting a measurement report corresponding to measurement performed on the SL-PRS resource $r_i^{SLPRS}$.

- Performing measurement on the SL-PRS resource $r_i^{SLPRS}$, and transmitting a corresponding measurement report. A corresponding measurement quantity may be indicated by the "control information related to positioning" (e.g., the operation may be expressed as "performing XXX measurement on the SL-PRS resource $r_i^{SLPRS}$", where XXX is the indicated measurement quantity), or may be determined in a predefined or configured or pre-configured manner. Specifically, for example, the "control information related to positioning" may indicate that SL-PRS RSRP measurement is performed on the SL-PRS resource $r_i^{SLPRS}$. As another example, the "control information related to positioning" may indicate that SL-RSTD measurement is performed on the SL-PRS resource $r_i^{SLPRS}$. As another example, the "control information related to positioning" may indicate that Rx-Tx time difference measurement is performed on the SL-PRS resource $r_i^{SLPRS}$. The measurement quantity may correspondingly include one or more SL-PRS resources of the SL-PRS resource $r_i^{SLPRS}$

- Performing an SL-PRS transmission on the SL-PRS resource $r_i^{SLPRS}$.

- Performing an SL-PRS transmission on the SL-PRS resource $r_i^{SLPRS}$, and under a certain condition (for example, when a specific other SL-PRS resource is associated with a specific operation), additionally performing a measurement operation on the SL-PRS resource $r_i^{SLPRS}$. For example, if $N_{PRS}^{SL} = 2$, and the "control information related to positioning" indicates that an SL-PRS transmission is performed on the SL-PRS resource $r_0^{SLPRS}$ and "Rx-Tx time difference" measurement is performed on the SL-PRS resource $r_1^{SLPRS}$, the SL-PRS transmission is performed on the SL-PRS resource $r_0^{SLPRS}$, a time of the SL-PRS transmission (for example, a start time of the SL-PRS transmission, denoted as, for example, $t_0^{SLPRS}$) is measured, a time (for example, a start time of the SL-PRS transmission, denoted as, for example, $t_1^{SLPRS}$) when an SL-PRS transmission (for example, performed by another communication node) is detected on the SL-PRS resource $r_1^{SLPRS}$ is measured, and the measured "Rx-Tx time difference" is determined according to $t_0^{SLPRS}$ and $t_1^{SLPRS}$.

Optionally, if the "control information related to positioning" indicates that an SL-PRS transmission is performed on the SL-PRS resource $r_i^{SLPRS} (i \in \{0, 1, ..., N_{PRS}^{SL} - 1\})$, a "destination ID" in "SL-PRS control information" associated with the SL-PRS transmission may be indicated by the "control information related to positioning", or may be determined in a predefined or configured or pre-configured manner. Optionally, for the SL-PRS resources $r_0^{SLPRS}$, $r_1^{SLPRS}$, ..., $r_{N_{PRS}^{SL}-1}^{SLPRS}$, the "destination IDs" are the same.

For $j \in \{0, 1, ..., N_{PRS,sub}^{SL} - 1\}$, the set $A_{PRS,j}^{SL}$ may be associated with one or more operations related to positioning. The one or more operations related to positioning associated with the set $A_{PRS,j}^{SL}$ may be indicated by the "control information related to positioning", or may be determined in a predefined or configured or pre-configured manner. The one or more operations related to positioning associated with the set $A_{PRS,j}^{SL}$ may each include one of a plurality of operations including some or all of the following:

- Respectively performing measurement of a certain measurement quantity on each SL-PRS resource in the set $A_{PRS,j}^{SL}$. The measurement quantity may be indicated by the "control information related to positioning" (for example, the measurement quantity is indicated in an indication for the measurement operation), or may be determined in a predefined or configured or pre-configured manner. For example, if the set $A_{PRS,j}^{SL} = \{r_0^{SLPRS}, r_1^{SLPRS}\}$, and the measurement quantity is SL-PRS RSRP, SL-PRS RSRP measurement is respectively performed on the SL-PRS resource $r_0^{SLPRS}$ and the SL-PRS resource $r_1^{SLPRS}$ in the set $A_{PRS,j}^{SL}$, and measurement results of the SL-PRS resource $r_0^{SLPRS}$ and the SL-PRS resource $r_1^{SLPRS}$ are generated, respectively.

- Respectively performing partial measurement of a certain measurement quantity on each SL-PRS resource in the set $A_{PRS,j}^{SL}$, and generating a measurement result corresponding to the measurement quantity according to measurements corresponding to all of the SL-PRS resources in the set $A_{PRS,j}^{SL}$. The measurement quantity may be indicated by the "control information related to positioning" (for example, the measurement quantity is indicated in an indication for the measurement operation), or may be determined in a predefined or configured or pre-configured manner.

- Transmitting a measurement report corresponding to the measurement performed on the set $A_{PRS,j}^{SL}$.

- Performing an SL-PRS transmission on each SL-PRS resource in the set $A_{PRS,j}^{SL}$.

Optionally, if the "control information related to positioning" indicates that an SL-PRS transmission is performed on each SL-PRS resource in the set $A_{PRS,j}^{SL}$ $(j \in \{0, 1, ..., N_{PRS,sub}^{SL} - 1\})$, a "destination ID" in "SL-PRS control information" associated with each SL-PRS transmission may be the same, and the "destination ID" may be indicated by the "control information related to positioning", or may be determined in a predefined or configured or pre-configured manner.

Optionally, for the sets $A_{PRS,0}^{SL}$, $A_{PRS,1}^{SL}$, ..., $A_{PRS,N_{PRS,sub}^{SL}-1}^{SL}$, the "destination IDs" are the same.

Optionally, for a measurement operation indicated by the "control information related to positioning", the "control information related to positioning" may additionally indicate a destination (e.g., the "source node" or another UE) of transmission of a corresponding measurement report.

Further, in step S603, an operation indicated by the control information related to positioning is performed. For example, an operation related to positioning (e.g., performing an SL-PRS transmission, or performing measurement and/or transmitting a corresponding measurement report) associated with each indicated SL-PRS resource is indicated on the indicated SL-PRS resource, respectively.

Thus, according to the description of Embodiment 6, provided in the present invention is a method, wherein the same control signaling format is used to instruct different UEs to perform an SL-PRS transmission and corresponding SL-PRS measurement, respectively, thereby improving the efficiency of signaling transmission and reducing the complexity of signaling design.

**Variant Embodiment**

Hereinafter, FIG. 7 is used to illustrate a communication node that may perform the method performed by a communication node (e.g., a UE or a network node) described in detail above according to the present invention as a variant embodiment.

FIG. 7 is a block diagram showing a communication node to which the present invention relates.

As illustrated in FIG. 7, the communication node CN70 includes a processor 701 and a memory 702. The processor 701 may include, for example, a microprocessor, a microcontroller, an embedded processor, and the like. The memory 702 may include, for example, a volatile memory (such as a random access memory (RAM)), a hard disk drive (HDD), a non-volatile memory (such as a flash memory), or other memories, etc. The memory 702 has program instructions stored thereon. The instructions, when run by the processor 701, may perform the foregoing method performed by a communication node described in detail in the present invention.

The method and related communication node according to the present invention have been described above with reference to preferred embodiments. It should be understood by those skilled in the art that the method shown above is only exemplary, and the above-described embodiments can be combined with one another as long as no contradiction arises. The method of the present invention is not limited to the steps or sequences illustrated above. The communication node illustrated above may include more modules. Various identifiers illustrated above are only exemplary, and are not meant to be limiting. The present invention is not limited to specific information elements serving as examples of these identifiers. Those skilled in the art could make various alterations and modifications according to the teachings of the illustrated embodiments.

It should be understood by those skilled in the art that any set is its own subset. An empty set is a subset of any set. Part or all of the mathematical expressions, mathematical equations, or mathematical inequalities may be simplified or transformed or rewritten to some extent (for example, merging constant terms, or interchanging two addition terms, or interchanging two multiplication terms, or moving a term from the left side of an equation or inequality to the right side after changing the plus or minus sign thereof, or moving a term from the right side of an equation or inequality to the left side after changing the plus or minus sign thereof, or the like). Mathematical expressions, mathematical equations, or mathematical inequalities before and after the simplification or transformation or rewriting may be considered to be equivalent to each other.

It should be understood that the above-described embodiments of the present invention may be implemented by software, hardware, or a combination of software and hardware. For example, various components in the communication node in the above embodiments may be implemented by multiple devices, and these devices include, but are not limited to:

**EP 4 572 441 A1**

an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present invention, the term "base station" may refer to a mobile communication data and/or control switching center having a certain transmission power and a certain coverage area, and, for example, having functions such as resource allocation and scheduling, and data reception and transmission. The term "user equipment" may refer to user mobile terminals, such as terminal devices that can wirelessly communicate with a base station or a micro base station, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., a CD-ROM), a flexible disk, or a hard disk, and the like, or other media such as firmware or micro codes on one or more ROM or RAM or PROM chips, or a downloadable software image, a shared database, and the like in one or more modules. Software or firmware or such configuration may be installed on a computing device such that one or more processors in the computing device performs the technical solutions described in the embodiments of the present invention.

In addition, each functional module or each feature of the communication node used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, discrete hardware components, or any combination of the above devices. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by a user equipment (UE), **characterized by** comprising:

   reporting a sidelink identity to a positioning server; and
   receiving, from the positioning server, a sidelink identity and location information of one or more anchor UEs and a sidelink identity of a corresponding positioning UE group; and
   transmitting a sidelink positioning reference signal on a sidelink by using the sidelink identity of the positioning UE group as a destination identity; and
   receiving a measurement result transmitted by the one or more anchor UEs for the sidelink positioning reference signal; and
   determining location information of the UE according to the measurement result and the location information of the one or more anchor UEs.

2. A user equipment, comprising:

   a processor; and
   a memory storing instructions,
   wherein the instructions, when run by the processor, perform the method according to claim 1.

```
┌─────────────────────────────────────┐
│  Determine contents of a type-1      │  ⌇  S101
│  indication message                  │
└─────────────────────────────────────┘
                 │
                 ▼
┌─────────────────────────────────────┐
│  Transmit the type-1 indication      │  ⌇  S103
│  message                             │
└─────────────────────────────────────┘
```

FIG. 1

```
┌─────────────────────────────────────┐
│  Determine contents of a type-2      │  ⌇  S201
│  indication message                  │
└─────────────────────────────────────┘
                 │
                 ▼
┌─────────────────────────────────────┐
│  Transmit the type-2 indication      │  ⌇  S203
│  message                             │
└─────────────────────────────────────┘
```

FIG. 2

Transmit a type-3 request message     S301

Receive one or more type-3 indication messages     S303

## FIG. 3

Determine a candidate anchor UE set     S401

Determine a subset of the candidate anchor UE set as an anchor UE set of a target UE     S403

Transmit one or more instances of information of the anchor UE set to the target UE     S405

Provide one or more instances of information of the target UE to one or more UEs in the anchor UE set, respectively     S407

## FIG. 4

Determine an SL ID of a "positioning UE group" ⟋ S501

Respectively provide the SL ID to one or more UEs in the "positioning UE group" ⟋ S503

# FIG. 5

Receive control information related to positioning ⟋ S601

Perform an operation indicated by the control information related to positioning ⟋ S603

# FIG. 6

CN70

Processor 701    Memory 702

# FIG. 7

## INTERNATIONAL SEARCH REPORT

| | International application No. |
|---|---|
| | **PCT/CN2023/112219** |

**A. CLASSIFICATION OF SUBJECT MATTER**

H04W64/00(2009.01)i; H04L5/00(2006.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNABS, CNTXT, CNKI, VEN, DWPI, ENTXT, 3GPP: 侧行链路, 侧链路, 副链路, 直连, 服务器, 网络侧, 锚点, 定位参考信号, 测量, 位置, sidelink, SL, server, network, anchor, PRS, position

**C. DOCUMENTS CONSIDERED TO BE RELEVANT**

| Category* | Citation of document, with indication, where appropriate, of the relevant passages | Relevant to claim No. |
|---|---|---|
| X | WO 2022125393 A1 (QUALCOMM INC.) 16 June 2022 (2022-06-16)<br>description, paragraphs 64, 111, 120, 122-123, 125, 127, and 133, and figure 7 | 1-2 |
| X | WO 2022132307 A1 (QUALCOMM INC.) 23 June 2022 (2022-06-23)<br>description, paragraphs 108-116, and figure 7 | 1-2 |
| A | CN 112867146 A (ZTE CORP.) 28 May 2021 (2021-05-28)<br>entire document | 1-2 |
| A | CN 114449653 A (APPLE INC.) 06 May 2022 (2022-05-06)<br>entire document | 1-2 |
| A | INTEL CORP. "R1-153991 Analysis of Anchored and Non-anchored D2D Aided Positioning"<br>*3GPP TSG RAN WG1 Meeting #82*, 28 August 2015 (2015-08-28),<br>entire document | 1-2 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 October 2023** | **01 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112219**

| Patent document cited in search report | | | Publication date (day/month/year) | Patent family member(s) | | | Publication date (day/month/year) |
|---|---|---|---|---|---|---|---|
| WO | 2022125393 | A1 | 16 June 2022 | TW | 202231082 | A | 01 August 2022 |
| | | | | KR | 20230118829 | A | 14 August 2023 |
| | | | | CN | 116848938 | A | 03 October 2023 |
| WO | 2022132307 | A1 | 23 June 2022 | KR | 20230121051 | A | 17 August 2023 |
| | | | | US | 2022201774 | A1 | 23 June 2022 |
| | | | | TW | 202226850 | A | 01 July 2022 |
| | | | | CN | 116848859 | A | 03 October 2023 |
| CN | 112867146 | A | 28 May 2021 | WO | 2022152251 | A1 | 21 July 2022 |
| CN | 114449653 | A | 06 May 2022 | EP | 3198897 | A1 | 02 August 2017 |
| | | | | JP | 2017527806 | A | 21 September 2017 |
| | | | | WO | 2016048509 | A1 | 31 March 2016 |
| | | | | US | 2016095080 | A1 | 31 March 2016 |
| | | | | CN | 106662634 | A | 10 May 2017 |
| | | | | HK | 1235863 | A0 | 09 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New WI proposal: Support for V2V services based on LTE sidelink, 3GPP TSG RAN Meeting#70. *RP-152293*
- New WID on 3GPP V2X Phase 2, 3GPP TSG RAN Meeting#75. *RP-170798*
- New WID on New Radio Access Technology, 3GPP TSG RAN Meeting#75. *RP-170855*
- New WID on 5G V2X with NR sidelink, 3GPP TSG RAN Meeting#83. *RP-190766*

- WID revision: NR sidelink enhancement, 3GPP TSG RAN Meeting#88e. *RP-201385*
- New WID on NR sidelink evolution, 3GPP TSG RAN Meeting#94e. *RP-213678*
- Revised WID on NR Positioning Enhancements, 3GPP TSG RAN Meeting#91e. *RP-210903*
- Revised SID on Study on expanded and improved NR positioning, 3GPP TSG RAN Meeting#94e. *RP-213588*